# EUROPÄISCHE PATENTSCHRIFT

(11) **EP 3 146 383 B1**
(45) Veröffentlichungstag und Bekanntmachung des Hinweises auf die Patenterteilung: **04.09.2019**
(21) Anmeldenummer: 15729762.3
(22) Anmeldetag: 22.05.2015
(51) Int. Cl.: G02C 7/06, G02B 27/42, G02B 5/32

(54) **BRILLENGLAS MIT EINER VIELZAHL VON BEUGUNGSSTRUKTUREN FÜR LICHT**
EYEGLASS LENS HAVING A PLURALITY OF DIFFRACTION STRUCTURES FOR LIGHT
VERRE DE LUNETTES COMPORTANT UNE PLURALITÉ DE STRUCTURES DE DIFFRACTION DE LUMIÈRE

(30) Priorität: 22.05.2014 DE 102014209792
(43) Veröffentlichungstag der Anmeldung: 29.03.2017
(73) Patentinhaber: Carl Zeiss Vision International GmbH, 73430 Aalen (DE); Carl Zeiss AG, 73447 Oberkochen (DE); Carl Zeiss Jena GmbH, 07745 Jena (DE)
(72) Erfinder: SESSNER, Rainer, 91154 Roth (DE); PETSCHULAT, Jörg, 07751 Jena (DE); RIFAI, Katharina, 72072 Tübingen (DE); KLOPFLEISCH, Peter, 07751 Jena (DE); BURKHARDT, Matthias, 07768 Eichenberg (DE); PACHER, Peter, 8700 LEOBEN (DE); KRATZER, Timo, 73434 Aalen (DE); KRUG, Herbert, 73433 Aalen (DE)
(74) Vertreter: Gauss, Nikolai
(86) Internationale Anmeldenummer: PCT/EP2015/061476
(87) Internationale Veröffentlichungsnummer: WO 2015/177370

(56) Entgegenhaltungen:
- WO-A1-99/34248
- WO-A1-2009/005822
- WO-A1-2009/079342

## Beschreibung

Die Erfindung betrifft ein Brillenglas für eine Beobachtungsperson mit einem für das Licht transparenten oder wenigstens teilweise transparenten Körper, der ein Phasenobjekt aufweist, welches das auf einer der Beobachtungsperson abgewandten Seite unter einem Einfallswinkel α einfallende Licht in eine von der Wellenlänge λ des Lichts und von dem Einfallswinkel α des Lichts abhängige Richtung lenkt.

Die Erfindung erstreckt sich auch auf ein Herstellungsverfahren für ein derartiges Brillenglas und auf ein Verfahren zum Ermitteln des Designs eines derartigen Brillenglases.

Ein Brillenglas der eingangs genannten Art ist aus der WO 99/34248 A1 bekannt. Dort ist eine Brillenglas mit übereinanderliegenden holographischen optischen Elementen (HOE) beschrieben. Die holographischen optischen Elemente bilden hier ein Volumengitter, mittels dessen das auf das Brillenglas unter einem bestimmten Einfallswinkel einfallende Licht gebeugt wird, was zu einer Ablenkung des auf das Brillenglas einfallenden Lichts für diesen Einfallswinkel führt.

In der WO 2014/064163 A1 ist ein Brillenglas mit einer Vielzahl von das Licht beugenden Zonen beschrieben, die eine unterschiedliche Brechkraft haben.

Brillengläser in Form von refraktiven Gleitsichtgläsern ermöglichen einer an Fehlsichtigkeit leidenden Beobachtungsperson, dass diese in unterschiedlichen Entfernungen angeordnete Objekte mit einem mehr oder weniger scharfen Seheindruck betrachten kann, auch wenn die Akkommodationsfähigkeit der Augen dieser Beobachtungsperson z. B. altersbedingt nicht mehr gegeben ist oder starke Einschränkungen aufweist.

Für das Design von refraktiven Gleitsichtgläsern werden üblicherweise Sehzonen definiert. Diese Sehzonen beziehen sich auf von der Blickrichtung einer Beobachtungsperson durchsetzte Bereiche der Oberfläche von einem Gleitsichtglas. Blickt die Beobachtungsperson durch unterschiedliche Sehzonen, so kann diese Beobachtungsperson Objekte in verschiedenen Objektdistanzen scharf sehen, ohne dass ein Auge hierfür akkommodiert werden muss.

Refraktive Gleitsichtgläser haben in der Regel eine Fernzone, die beim bestimmungsgemäßen Gebrauch dieser Gläser von der Blickrichtung eines Auges einer in die Ferne blickenden Beobachtungsperson durchsetzt wird. Beim Blick durch die Fernzone sollen die für die Beobachtungsperson im Unendlichen angeordnete Objekte scharf auf der Netzhaut abgebildet werden. Darüber hinaus haben refraktive Gleitsichtgläser neben der Fernzone meist auch eine sogenannte Nahzone, die von der Fernzone beabstandet ist und durch die eine Beobachtungsperson beim bestimmungsgemäßen Gebrauch des Gleitsichtglases bei einer maximalen Akkommodation hindurch blickt, um in einer Nahdistanz (z. B. 40 cm) vor den Augen angeordnete Objekte zu beobachten.

Zwischen der Nahzone und der Fernzone haben Gleitsichtgläser häufig einen sogenannten Progressionskanal. Dieser Progressionskanal verbindet die Fernzone mit der Nahzone. In dem Progressionskanal ist die Brechkraft des Gleitsichtglases lokal unterschiedlich. Um einer Beobachtungsperson mit der Gleitsichtbrille ein weites Sehfeld zur Verfügung zu stellen, wird grundsätzlich angestrebt, dass der Progressionskanal möglichst breit ist. Die erzielbare Breite des Progressionskanals ist jedoch aufgrund des differentialgeometrischen Satzes von Minkwitz beschränkt. Aus diesem mathematischen Satz folgt, dass eine Beobachtungsperson mit zunehmender Breite des Progressionskanals nicht korrigierbare astigmatische Abbildungsfehler, d. h. einen durch den Satz von Minkwitz bedingten Astigmatismus in Kauf nehmen muss. Der Abbildungsqualität von refraktiven Gleitsichtgläsern und der möglichen Ausdehnung der Nahbereichs- und Fernbereichszone von refraktiven Gleitsichtgläsern sind deshalb grundsätzliche Grenzen gesetzt.

Aufgabe der Erfindung ist es, ein Brillenglas für eine Beobachtungsperson bereitzustellen, dessen optische Wirkung für unterschiedliche Blickrichtungen mit einer verbesserten Abbildungsqualität an die Bedürfnisse der Beobachtungsperson angepasst werden kann, und ein Verfahren zum Ermitteln des Designs eines solchen Brillenglases sowie ein Herstellungsverfahren für ein solches Brillenglas anzugeben.

Unter der optischen Wirkung von einem Brillenglas wird dabei vorliegend die Eigenschaft verstanden, Licht abzulenken.

Diese Aufgabe wird mit dem in Anspruch 1 angegebenen Brillenglas dem in Anspruch 12 angegebenen Verfahren zum Ermitteln des Designs eines Brillenglases und das in Anspruch 14 angegebene Herstellungsverfahren gelöst. Vorteilhafte Weiterbildungen der Erfindung sind in den abhängigen Ansprüchen angegeben.

Der Erfindung liegt der Gedanke zugrunde, dass einer Beobachtungsperson mit einem Brillenglas unterschiedliche Entfernungsbereiche scharf und ohne die in den peripheren Bereichen eines Gleitsichtglases zwangsläufig auftretenden astigmatischen Abbildungsfehler visualisiert werden können, wenn die den Objektbereich abbildenden Lichtstrahlen nicht durch Brechung, sondern durch Beugung abgelenkt werden.

Unter der Beugung von Licht wird vorliegend das physikalische Phänomen der durch ein Phasenobjekt hervorgerufenen Veränderung der Phase des Lichts aufgrund von Wechselwirkungen zwischen Licht und Materie verstanden. Ein Phasenobjekt ist dabei ein vorzugsweise transparentes Objekt, das die Phase des Lichts beeinflusst bzw. verändert. Damit Licht an einem Phasenobjekt gebeugt wird, muss das Phasenobjekt eine Beugungsstruktur auf-weisen. Eine solche Beugungsstruktur stellt eine regelmäßige oder auch unregelmäßige räumliche Modulation des komplexen Brechungsindex dar, z. B. in Form eines Gitters, das sich in einer Dimension oder in zwei Dimensionen (ebenes Gitter) oder in drei Dimensionen erstrecken kann (Volumengitter).

Eine Beugungsstruktur beugt das Licht in Abhängigkeit von dem Einfallswinkel des Lichtes, unter dem es auf die Beugungsstruktur auftrifft, und in Abhängigkeit von der Wellenlänge λ des Lichts. Wenn Licht an einer Beugungsstruktur gebeugt wird, so kann es aufgrund von konstruktiver Interferenz in eine oder mehrere unterschiedliche, diskrete Richtungen abgelenkt werden. Diese Richtungen werden vorliegend Beugungsordnungen genannt und nach allgemeiner Konvention mit ganzen Zahlen 0, ±1, ±2, ±3, ... bezeichnet, wobei die zentrale Ordnung mit 0 bezeichnet wird, und alle weiteren Ordnungen durchnummeriert werden.

Unter der Beugung des Lichtes in eine Beugungsordnung |m| ≥ 1 wird demnach die Ablenkung des Lichtes in die durch die Beugungsordnung definierte Richtung verstanden, die durch konstruktive Interferenz von phasenverschobenem Licht zustande kommt.

Mit einem erfindungsgemäßen Brillenglas wird es einer Beobachtungsperson insbesondere ermöglicht, auch bei eingeschränkter Akkommodationsfähigkeit der Augen in unterschiedlichen Entfernungsbereichen angeordnete Objekte scharf und ohne den Seheindruck verzerrende Abbildungsfehler wahrzunehmen.

Ein erfindungsgemäßes Brillenglas hat einen Körper, der für das Licht transparent oder wenigstens teilweise transparent ist. Ein solcher Körper ist also für das Licht zumindest teilweise transparent.

Der Winkel, in den ein Lichtstrahl von einer Beugungsstruktur gebeugt wird, und der Winkel, unter dem ein von der Beugungsstruktur gebeugter Lichtstrahl auf die Beugungsstruktur auftreffen kann, nimmt dabei mit wachsendem Betrag der Beugungsordnung zu. Eine positive Beugungsordnung entspricht dabei einem auf die Einfallsrichtung bezogenen Ablenkungswinkel für das Licht, der positiv ist, eine negative Beugungsordnung einem auf die Einfallsrichtung des Lichts bezogenen negativen Ablenkungswinkel.

Das Verhältnis der Intensität I_{gebeugt} des von einer Beugungsstruktur in eine Beugungsordnung |m| ≥ 1 gebeugten Lichts zu der Intensität I_{einfallend} des auf eine Grenzfläche der Beugungsstruktur unter einem bestimmten Einfallswinkel a' einfallenden Lichts wird vorliegend als die Beugungseffizienz η der Beugungsstruktur bezeichnet. Die Grenzfläche einer Beugungsstruktur kann mit der Oberfläche des transparenten Körpers des Brillenglases zusammenfallen, sie muss es aber nicht. Die Grenzfläche einer Beugungsstruktur kann sich auch innerhalb des transparenten Körpers befinden.

Die Erfindung nutzt aus, dass die Beugungseffizienz einer Beugungsstruktur in einer auf einem Träger angeordneten Schicht aus optisch transparentem Material abhängig ist von:
- der Wellenlänge des Lichts (λ),
- dem Brechungsindex (n) des Materials, aus dem das diffraktive optische Element aufgebaut ist,
- dem Brechungsindex (n₀) des umgebenden Mediums,
- der Dicke (d) der Schicht, in welcher der Brechungsindex moduliert ist,
- der Amplitude (Δn) der Modulation des Brechungsindex (n),
- der Periode P der Modulation des Brechungsindex (n), und
- dem Einfallswinkel (α',α") des Lichts auf eine Grenzfläche der Beugungsstruktur.

Die aufgrund der Abhängigkeit zwischen diesen Größen implizit bestehende Relation bedeutet, dass für eine gegebene Wellenlänge der Einfallswinkel angegeben werden kann, unter dem die Schicht, in welcher der Brechungsindex moduliert ist, das auf sie einfallende Licht effizient beugt, d. h. so, dass die Beugungseffizienz η größer ist als ein bestimmter grundsätzlich wählbarer Schwellwert.

Erfindungsgemäß weist das Phasenobjekt eine Vielzahl von Beugungsstrukturen auf, die monochromatisches Licht der Wellenlänge 380nm ≤ λ ≤ 800nm mit der Beugungseffizienz η ≥ 70% in ein und dieselbe Beugungsordnung |m| ≥ 1 beugen, wenn das monochromatische Licht unter einem Einfallswinkel α auf die der Beobachtungsperson abgewandte Seite des Brillenglases einfällt, der innerhalb eines 15° breiten, von der Wellenlänge des Lichts abhängigen beugungsstrukturspezifischen Winkelintervall liegt.

Unter dem Einfallswinkel des Lichts auf eine Grenzfläche wird vorliegend der von der Ausbreitungsrichtung des Lichts mit der Flächennormalen *̅n̅*̅ der dem einfallenden Licht zugewandten Grenzfläche gebildete Winkel α verstanden.

Von Vorteil ist es, wenn das Phasenobjekt des transparenten Körpers der optischen Sehhilfe eine Vielzahl von Beugungsstrukturen umfasst, die jeweils sämtliches Licht einer in einem beugungsstrukturspezifischen Wellenlängenintervall λ₀ ± 0,1 µm liegenden Wellenlänge λ, das unter einem in einem beugungsstrukturspezifischen Einfallswinkelbereich α₀ ± 2,5° liegenden Einfallswinkel α, vorzugsweise unter einem in einem beugungsstrukturspezifischen Einfallswinkelbereich α₀ ± 2° liegenden Einfallswinkel α auf die der Beobachtungsperson abgewandten Seite des Brillenglases auftrifft, mit der Beugungseffizienz η ≥ 70% in ein und dieselbe Beugungsordnung |m| ≥ 1 ablenken.

Von den vorstehend angegebenen Werten für die Breite des Wellenlängenintervalls von 0,2 µm und der Breite des Bereichs für den Einfallswinkel α sowie den Schwellwert ηₘᵢₙ von 70% für die Beugungseffizienz η kann abgewichen werden (nicht durch die unabhängigen Ansprüche gedeckt). Die Abweichung von den vorgenannten Werten beträgt jedoch nicht mehr als 20%, bevorzugt nicht mehr als 10%, besonders bevorzugt nicht mehr als 5%. Eine einzelne Beugungsstruktur in einer erfindungsgemäßen optischen Sehhilfe kann z. B. 17 µm dick sein und eine Ausdehnung von etwa 25 Quadratmillimeter (mm²) haben. Die vorgenannte Eigenschaft einer Beugungsstruktur lässt sich z. B. mit einer Dichte LD = 1/Λ von das Licht beugenden Strukturen in Form eines modulierten Brechungsindex erreichen (Liniendichte), wobei Λ die Periode der Strukturen ist, die etwa 300 bis 5000 Linien pro Millimeter bei einem Brechungsindex von z.B. n = 1,492 und der Modulationsamplitude von Δn = 0,02 beträgt. Das optisch transparente Material kann dabei ein Fotopolymer sein, insbesondere ein Fotopolymer, das die in der WO 2012/062658 A1 beschriebene Formulierung hat, auf die hiermit vollumfänglich Bezug genommen wird.

Die Beugungsstrukturen sind bevorzugt so ausgebildet, dass sie jeweils näherungsweise ein in der von dem Einfallswinkel α und der Wellenlänge λ mit einer Wellenlängen-Parameterachse und einer Einfallswinkel-Parameterachse aufgespannten Parameterebene entlang einer in Bezug die Wellenlänge λ monoton ansteigenden Gerade erstrecktes Effizienzfenster haben, in dem das unter einem bestimmten Einfallswinkel α auf die der Beobachtungsperson abgewandten Seite des Brillenglases einfallende Licht mit der Beugungseffizienz η ≥ 70% in ein und dieselbe Beugungsordnung |m| ≥ 1 gebeugt wird, wenn das einem Punkt in der Parameterebene entsprechende Parameterpaar [α, λ] der Wellenlänge λ und des Einfallwinkels α des Lichts in dem Effizienzfenster liegt.

Eine Gerade, entlang der das Effizienzfenster erstreckt ist, kann insbesondere eine Gerade sein, die näherungsweise einer das Effizienzfenster durchsetzenden Linie folgt, auf der die Beugungseffizienz maximal ist. An den auf dieser Linie liegenden Punkten verläuft somit der Gradient der Beugungseffizienz η nach dem Einfallswinkel α und der Wellenlänge λ in der von der Wellenlänge λ und dem Einfallswinkel α aufgespannten Parameterebene an diese Linie tangential.

Für die Steigung δ der Geraden gilt dabei δ ≤ 0,036 °/nm, bevorzugt δ ≤ 0,024 °/nm, besonders bevorzugt δ ≤ 0,012 °/nm.

Erfindungsgemäß können die Beugungsstrukturen in der von dem Einfallswinkel α und der Wellenlänge λ mit einer Wellenlängen-Parameterachse und einer Einfallswinkel-Parameterachse aufgespannten Parameterebene auch so ausgebildet sein, dass sie jeweils ein entlang einer in Bezug auf die Wellenlänge λ monoton ansteigenden Gerade zwischen einer zu der ansteigenden Geraden parallelen ersten Tangente und einer zu der ersten Tangente in der Richtung der Einfallswinkel-Parameterachse um den Winkel Δα ≤ 20°, bevorzugt Δα ≤ 15°, besonders bevorzugt Δα ≤ 10° oder Δα ≤ 6° parallel verschobene zweiten Tangente erstrecktes Effizienzfenster haben, in dem das unter einem bestimmten Einfallswinkel α auf das Brillenglas einfallende Licht mit der Beugungseffizienz η ≥ 70% in ein und dieselbe Beugungsordnung |m| ≥ 1 gebeugt wird, wenn das einem Punkt in der Parameterebene entsprechende Parameterpaar [α, λ] der Wellenlänge λ und des Einfallwinkels a des Lichts in dem Effizienzfenster liegt.

Das Effizienzfenster kann sich dabei näherungsweise symmetrisch entlang der Geraden erstrecken.

Eine jede Beugungsstruktur für Licht kann hierfür insbesondere als eine Modulation des komplexen Brechungsindex n(λ; x,y,z) := nᵣ(λ; x,y,z) + inᵢ(λ, x,y,z) des transparenten Körpers in wenigstens einer Raumrichtung ausgebildet sein.

Eine Amplitude Δn(λ) der Modulation des komplexen Brechungsindex n(λ; x,y,z) kann dabei z. B. der folgenden Beziehung für das Licht der Wellenlänge 380 nm ≤ λ ≤ 800 nm genügen: 0,01 ≤|Δn(λ)| ≤ 0,05.

Von Vorteil ist es, wenn eine jede Beugungsstruktur mit einer von der Beugungsstruktur räumlich getrennten weiteren Beugungsstruktur ein Aktuator-Kompensator-Paar bildet, wobei sich die von den ein Aktuator-Kompensator-Paar bildenden Beugungsstrukturen hervorgerufenen Ablenkungen des auf die der Beobachtungsperson abgewandte Seite des Brillenglases unter dem Einfallswinkel einfallenden Lichts wenigstens teilweise aufheben.

Die ein Aktuator-Kompensator-Paar bildenden Beugungsstrukturen können dabei aneinander angrenzen. Es ist jedoch auch möglich, dass die ein Aktuator-Kompensator-Paar bildenden Phasenobjekte voneinander beabstandet sind.

Das Phasenobjekt in dem Körper des Brillenglases kann eine optische Wirkung, d. h. eine das Licht ablenkende Wirkung, insbesondere eine Linsenwirkung haben. Der Körper kann auch ein Phasenobjekt aufweisen, das aus übereinanderliegenden Schichten eines optisch transparenten Materials mit einem modulierten Brechungsindex aufgebaut ist. Die übereinanderliegenden Schichten des optisch transparenten Materials können dabei auf einem für das sichtbare Licht transparenten Träger aufgebracht sein.

Im Rahmen der Erfindung ist es möglich, dass das Brillenglas zusätzlich zu der das Licht beugenden Wirkung auch eine das Licht brechende Wirkung hat. Die optische Wirkung des Brillenglases ist bevorzugt von einer das Brillenglas durchsetzenden Blickrichtung der Beobachtungsperson abhängig.

Der für das Licht transparente oder wenigstens teilweise transparente Körper des Brillenglases kann einen Rand und zwei oder mehr zusammenhängende, sich über das Brillenglas erstreckende und das Brillenglas dabei überdeckende Sehzonen mit einer unterschiedlichen optischen Wirkung aufweisen, wobei der transparente Körper des Brillenglases dabei keine Bereiche mit einem durch den Satz von Minkwitz bedingten Astigmatismus hat.

Die Erfindung erstreckt sich auch auf ein Verfahren zum Ermitteln des Designs eines Brillenglases, bei dem
- für das Brillenglas eine Geometrie und eine optische Übertragungsfunktion vorgegeben wird; und
- für die vorgegebene optische Übertragungsfunktion und die vorgegebene Geometrie ein Phasenobjekt berechnet wird, das eine Vielzahl von Beugungsstrukturen aufweist und das eine diffraktive Wirkung f(θₐ) hat, die zusammen mit der refraktiven Wirkung des Brillenglases die vorgegebene optische Übertragungsfunktion zumindest approximiert.

Darüber hinaus erstreckt sich die Erfindung auch auf ein Verfahren zum Ermitteln des Designs eines Brillenglases, bei dem eine vorgegebene optische Übertragungsfunktion wenigstens einen Sehfehler der Beobachtungsperson zumindest teilweise kompensiert.

Außerdem erstreckt sich die Erfindung auf ein Herstellungsverfahren für ein Brillenglas,
- bei dem ein transparenter Träger bereitgestellt wird;
- bei dem auf dem transparenten Träger eine optische Schicht oder mehrere optische Schichten aus einem Fotopolymer aufgebracht werden; und
- bei dem in einer optischen Schicht ein Hologramm eines in einer definierten Position in Bezug auf die optische Schicht angeordneten optischen Elements erzeugt wird.

Vorteilhafte Ausführungsbeispiele der Erfindung sind in den Zeichnungen schematisch dargestellt und werden nachfolgend beschrieben.

Es zeigen:
- Fig. 1: eine Brille mit einem erfindungsgemäßen Brillenglas;
- Fig. 2: einen dreidimensionalen Teilschnitt eines Brillenglases der Brille mit einer Objektfläche und mit einem Auge einer Beobachtungsperson;
- Fig. 3: eine räumliche Visualisierung einer dreidimensionalen Beugungsstruktur des Brillenglases;
- Fig. 4: eine erste Visualisierung der Beugungsstruktur in einer in der Fig. 3 kenntlich gemachten Schnittebene;
- Fig. 5: eine zweite Visualisierung einer Beugungsstruktur in der in der Fig. 3 kenntlich gemachten Schnittebene;
- Fig. 6: einen vergrößerten Abschnitt des in der Fig. 2 gezeigten Teilschnitts;
- Fig. 7: eine resultierende Beugungseffizienz von mehreren aneinandergrenzenden Beugungsstrukturen;
- Fig. 8: eine Schnittansicht mit dem Verlauf des Brechungsindex in diesen Beugungsstrukturen;
- Fig. 9: die Beugungseffizienz einer ersten einzelnen Beugungsstruktur,
- Fig. 10: eine Schnittansicht mit dem schematischen Verlauf des Brechungsindex in dieser ersten einzelnen Beugungsstruktur;
- Fig. 11: die Beugungseffizienz einer zweiten einzelnen Beugungsstruktur;
- Fig. 12: eine Schnittansicht mit dem Verlauf des Brechungsindex in dieser zweiten einzelnen Beugungsstruktur;
- Fig. 13: die Beugungseffizienz einer dritten einzelnen Beugungsstruktur,
- Fig. 14: eine Schnittansicht mit dem Verlauf des Brechungsindex in dieser dritten einzelnen Beugungsstruktur;
- Fig. 15: die Summe der Beugungseffizienzen der ersten, zweiten und dritten einzelnen Beugungsstruktur;
- Fig. 16: das Herstellen von einem Brillenglas mit Beugungsstrukturen;
- Fig. 17: eine Vorrichtung für das Herstellen von Beugungsstrukturen auf einem transparenten Träger;
- Fig. 18: das Ermitteln des Designs von einem Brillenglas mit Beugungsstrukturen; und
- Fig. 19: bis Fig. 23 verschiedene als Gleitsichtglas oder Multifokalglas ausgebildete Brillengläser.

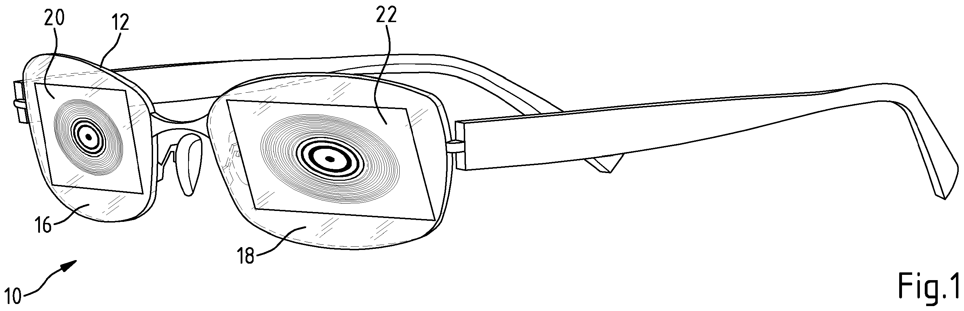

Die in der Fig. 1 gezeigte Brille 10 hat ein Brillengestell 12, in dem ein linkes und ein rechtes Brillenglas 16, 18 aufgenommen ist. Die Brille kann aber auch als ein Monokel mit lediglich einem Brillenglas ausgeführt sein.

Die Brillengläser 16, 18 haben jeweils einen für das sichtbare Licht transparenten Körper. Die Bauform des Brillenglases 16 entspricht im Grundsatz der Bauform des Brillenglases 18. Vorzugsweise haben die Brillengläser 16, 18 eine auf das linke und das rechte Auge einer Beobachtungsperson abgestimmte, vorzugsweise individualisierte optische Wirkung. Die Brillengläser 16, 18 haben einen Körper, der aus für das sichtbare Licht durchlässigem Kunststoff hergestellt ist.

In dem transparenten Körper des Brillenglases 16 und des Brillenglases 18 gibt es jeweils Phasenobjekte 20, 22. Diese Phasenobjekte 20, 22 enthalten eine Vielzahl von Beugungsstrukturen.

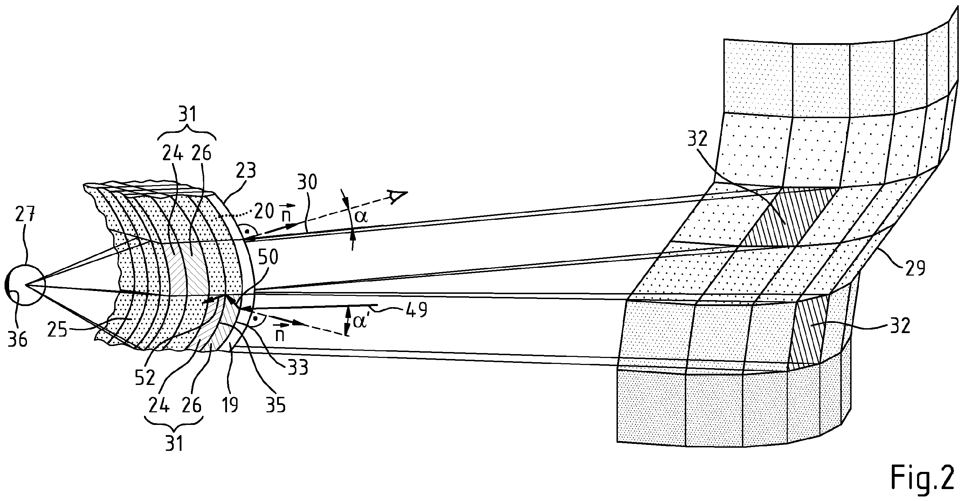

Die Fig. 2 ist ein dreidimensionaler Teilschnitt des Brillenglases 16 aus Fig. 1. Der Körper des Brillenglases 16 umfasst einen Träger 19 aus einem optischen Kunststoff. Grundsätzlich kann der Träger 19 aber auch z. B. aus einem Mineralglas bestehen. Das Phasenobjekt 20 in dem Körper des Brillenglases 16 hat eine optische Wirkung. Es weist hierfür eine Vielzahl von Beugungsstrukturen 24, 26 auf. Das Licht von einer Objektfläche 29, das durch die Brillenglas-Vorderfläche 23 gelangt und in der Einfallsrichtung 30 auf die Brillenglas-Vorderfläche 23 unter dem auf die Oberflächennormale *̅n̅*̅ bezogenen Einfallswinkel α trifft, durchsetzt die Beugungsstrukturen 24, 26 in dem Brillenglas 16. Dieses Licht verlässt den Körper des Brillenglases 16 durch die Brillenglas-Rückfläche 25. Von dort trifft es auf das Auge 27 einer Beobachtungsperson.

Die Beugungsstrukturen 24, 26 sind als eine räumliche Modulation des komplexen Brechungsindex des transparenten Körpers des Brillenglases 16 ausgebildet. In dem Brillenglas 16 ist die zweite Beugungsstruktur 26 von der ersten Beugungsstruktur 24 beabstandet angeordnet. Die erste Beugungsstruktur 24 und die zweite Beugungsstruktur 26 sind hier also voneinander räumlich getrennt. Zwischen den Beugungsstrukturen 24, 26 in dem Brillenglas 16 besteht somit vorliegend kein Überlapp.

Von den vielen Beugungsstrukturen 24, 26 des Phasenobjekts des Brillenglases 16 bilden jeweils zwei ein sogenanntes Aktuator-Kompensator-Paar 31. In einem Aktuator-Kompensator-Paar 31 wird die Ablenkung des Lichts, die von einer Beugungsstruktur, z. B. der Beugungsstruktur 26 hervorgerufen wird, wenn das Licht diese Beugungsstruktur durchsetzt, von der anderen Beugungsstruktur, z. B. der Beugungsstruktur 24, wenigstens teilweise wieder rückgängig gemacht, wenn das Licht auch durch diese Beugungsstruktur hindurchtritt.

Das Phasenobjekt des Körpers des vorstehend beschriebenen Brillenglases weist also eine Vielzahl von Aktuator-Kompensator-Paaren 31 auf. Es sei bemerkt, dass die ein Aktuator-Kompensator-Paar 31 bildenden Beugungsstrukturen nicht zwingend aneinandergrenzen müssen, sondern auch voneinander beabstandet sein können.

Das Phasenobjekt des Brillenglases 16 enthält für ein jedes Flächensegment 32 der Objektfläche 29 mindestens ein Aktuator-Kompensator-Paar 31 aus zwei unterschiedlichen Beugungsstrukturen 24, 26, mit denen das auf das Brillenglas 16 auftreffende Licht, das von einem Flächensegment 32 herrührt, so gebeugt wird, dass auf der Netzhaut 36 des Auges 27 der Beobachtungsperson ein scharfes Bild des betreffenden Flächensegments 32 der Objektfläche 29 entsteht. Die Aktuator-Kompensator-Paare 31 in dem Phasenobjekt des Brillenglases 16 bewirken hier auf der Netzhaut 36 ein aus mosaikartig zusammengesetzten Bildern zu unterschiedlichen Flächensegmenten 32 der Objektfläche 29 aufgebautes Gesamtbild der Objektfläche 29.

Das auf die Grenzfläche 33 der Beugungsstruktur 26 in der Ausbreitungsrichtung 49 unter dem in dem Einfallswinkelbereich α'₀ ± 2° liegenden Einfallswinkel α' einfallende Licht wird hier mit der Beugungseffizienz η ≥ 70% in der mit dem Pfeil 50 kenntlich gemachten Richtung in das erste Beugungsmaximum m =1 gebeugt. Die damit verbundene faktische Ablenkung des in der Richtung des Pfeils 50 auf die Grenzfläche 35 einfallenden Lichts wird aufgrund von entsprechender Beugung des Lichts in der Beugungsstruktur 24 mit der Beugungseffizienz η ≥ 70% in der mit dem Pfeil 52 kenntlich gemachten Richtung wenigstens teileweise wieder rückgängig gemacht.

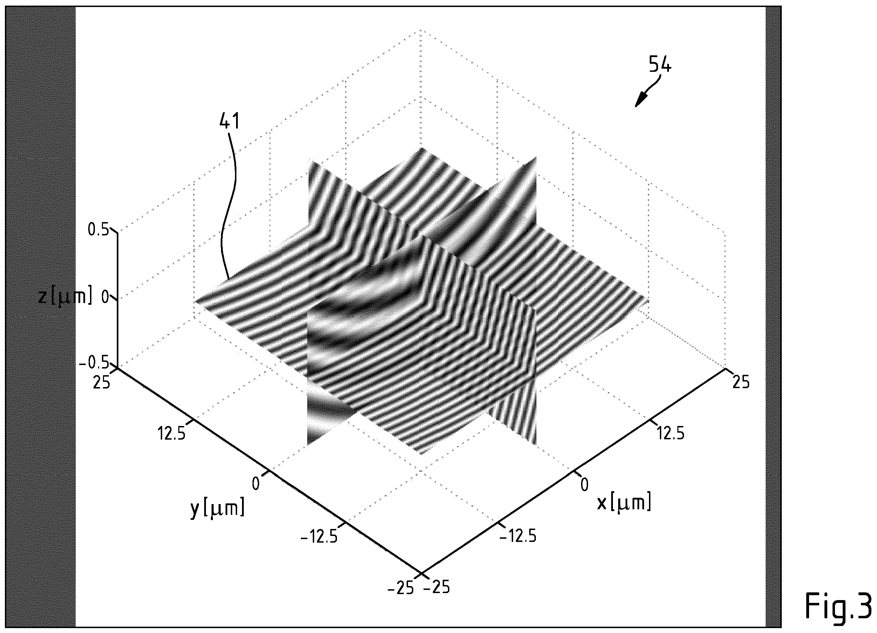

Die Fig. 3 ist eine räumliche Visualisierung einer beispielhaften Beugungsstruktur 24, 26 in dem transparenten Körper des Brillenglases 16. Der dreidimensionale Graph 54 in der Fig. 3 zeigt die räumliche Modulation des Betrags |η(λ; x,y,z)| des komplexen Brechungsindex η(λ; x,y,z) := nᵣ(λ; x,y,z) + inᵢ(λ, x,y,z) in den drei Raumrichtungen x, y, z in einem Abschnitt der ersten Beugungsstruktur 24 als ein Graustufenbild. Je heller das Graustufenbild, desto größer ist hier der Betrag des komplexen Brechungsindex |η(λ; x,y,z)|.

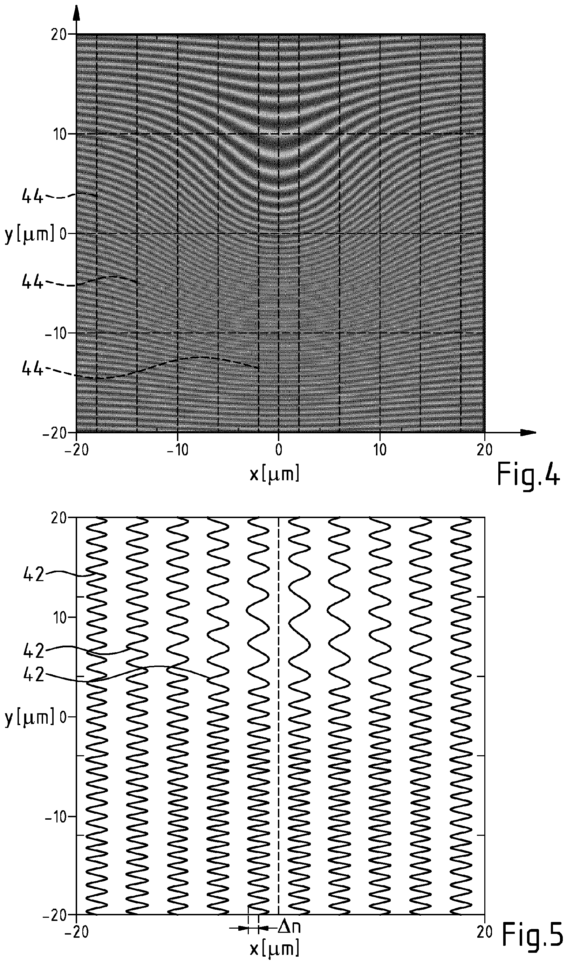

Die Fig. 4 visualisiert die Beugungsstruktur 24 in dem transparenten Körper des Brillenglases 16 als ein Graustufenbild über die räumliche Modulation des Betrags |η(λ; x,y,z)| des komplexen Brechungsindex in der in der Fig. 3 kenntlich gemachten Teilebene 41, die zu der x-y-Ebene in der Fig. 3 parallel ist. Auch hier ist das Graustufenbild umso heller, je größer der Betrag des komplexen Brechungsindex |η(λ; x,y,z)| ist.

Die Fig. 5 visualisiert die Beugungsstruktur 24 in dem Brillenglas 16 in der Teilebene 41 aus Fig. 3 anhand von Kurven 42 über die Modulation des Betrags des komplexen Brechungsindex |η(λ; x,y,z)| entlang den Linien 44 aus Fig. 4.

Die Beugungsstrukturen 24, 26 in dem Brillenglas 16 haben die Eigenschaft, dass die Amplitude Δn(λ) der Modulation des komplexen Brechungsindex η(λ; x,y,z) des Phasenobjekts dieser Beugungsstruktur für das Licht der Wellenlänge 380 nm ≤ λ ≤ 800 nm die folgende Beziehung erfüllt: 0,01 ≤|*Δn*(λ)| ≤ 0,05.

Sämtliche Beugungsstrukturen 24, 26 des transparenten Körpers des Brillenglases sind so dimensioniert, dass sie das Licht einer in einem beugungsstrukturspezifischen Wellenlängenintervall λ₀ ± 0,1 µm liegenden Wellenlänge λ, das unter einem in einem beugungsstrukturspezifischen Einfallswinkel a' auf die der Objektfläche 29 (siehe Fig. 2) zugewandte Grenzfläche 33 auftrifft, der in einem beugungsstrukturspezifischen Einfallswinkelbereich α₀ ± 2,5° liegt, mit der Beugungseffizienz η ≥ 70% in ein und dieselbe Beugungsordnung |m| ≥ 1 beugen. Darüber hinaus haben sämtliche Beugungsstrukturen 24, 26 die Eigenschaft, dass damit jeweils monochromatisches Licht mit einer Wellenlänge innerhalb des Wellenlängenbereichs 380nm ≤ λ ≤ 800nm mit der Beugungseffizienz η ≥ 70% in ein und dieselbe Beugungsordnung |m| ≥ 1 gebeugt wird, wenn das monochromatische Licht unter einem Einfallswinkel α auf das optische Element 16, 18 einfällt, der innerhalb eines 15° breiten, von der Wellenlänge des Lichts abhängigen beugungsstrukturspezifischen Winkelintervall liegt.

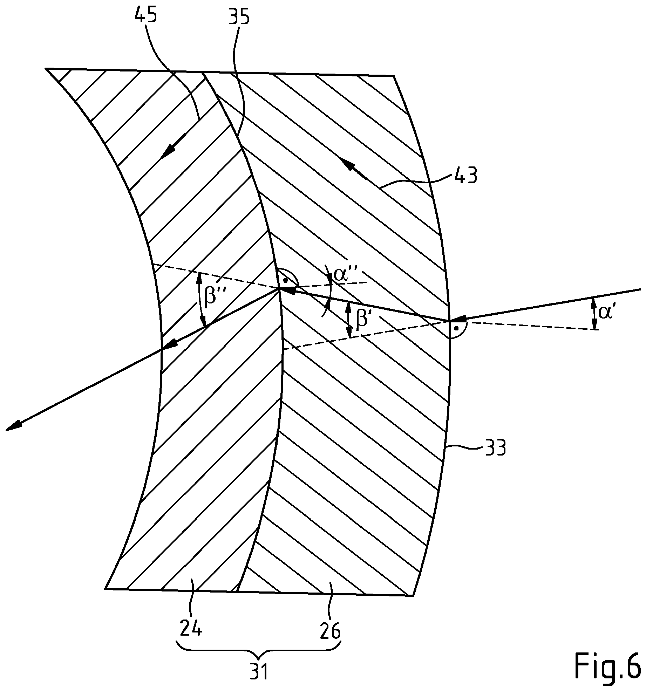

Die Fig. 6 ist eine vergrößerte Ansicht eines Aktuator-Kompensator-Paars 31 aus Fig. 2. Die in dem Brillenglas 16 ausgebildeten Beugungsstrukturen 24, 26 wirken jeweils als ein Brechungsindex - Volumengitter, das Licht, dessen auf die objektseitige Grenzflächen 33, 35 der Beugungsstruktur 24, 26 bezogener Einfallswinkel a', a" innerhalb eines bestimmten Einfallswinkelintervalls α₀ ± 2°, α₀ ± 2° liegt, in unterschiedliche Richtungen beugt, die einem von dem Einfallswinkel a', a" stetig abhängigen, auf die objektseitige Grenzfläche 33, 35 bezogenen Ablenkungswinkel β', β" entsprechen. Zu bemerken ist, dass in dieser Ansicht der Einfachheit halber die beugende Wirkung der Beugungsstrukturen 24, 26 jeweils an den objektseitigen Grenzflächen 33, 35 dargestellt ist.

Der komplexe Brechungsindex n(λ; x,y,z) in der Beugungsstruktur 26 hat einen Verlauf, der in der Richtung der Linie 43 eine Translationsinvarianz aufweist. In der Beugungsstruktur 24 ist der komplexe Brechungsindex n(λ; x,y,z) dabei in der Richtung der Line 45 translationsinvariant. Zu bemerken ist, dass die Linien 43, 45 grundsätzlich nicht nur gerade, sondern auch gekrümmt sein können.

Durch das Einstellen der Richtung einer lokalen Translationsinvarianz des komplexen Brechungsindex n(λ; x,y,z) in einer Beugungsstruktur 26 des Phasenobjekts in dem Brillenglas 16 ist es möglich, die Richtung definiert einzustellen, in die ein Lichtstrahl gebeugt wird, der die betreffende Beugungsstruktur in dem Phasenobjekt durchsetzt.

Die Erfindung nutzt dabei aus, dass, wie die Erfinder erkannt haben, ein in dem transparenten Körper eines Brillenglases ausgebildetes Phasenobjekt aus einer Vielzahl, das Licht beugenden Beugungsstrukturen 24, 26 aufgebaut werden kann. Dabei können die Beugungsstrukturen in einem Phasenobjekt auch zumindest teilweise einander überlagert sein. Eine jede Beugungsstruktur beugt allerdings nur dasjenige Licht, dessen Wellenlänge λ in einem bestimmten Wellenlängenbereich λ₀ ± Δλ liegt und das unter einem auf die objektseitige Grenzfläche bezogenen Einfallswinkel a' auf die Beugungsstruktur trifft, der in einem bestimmten beugungsstrukturspezifischen Einfallswinkelbereich α₀ ± Δα liegt.

Die auf einen bestimmten Wellenlängenbereich λ₀ ± Δλ und einen bestimmten Einfallswinkelbereich α'₀ ± Δα' für das Licht abgestimmten unterschiedlichen Beugungsstrukturen haben dabei jeweils keinen spürbaren, das Licht beugenden Einfluss auf Licht, dessen Wellenlänge λ und dessen auf die objektseitige Grenzfläche bezogener Einfallswinkel a' außerhalb des charakteristischen, beugungsstrukturspezifischen Bereichs für den Einfallswinkel a' und die Wellenlänge λ einer einzelnen Beugungsstrukturkomponente liegt.

Die räumliche Überlagerung der Vielzahl das Licht beugenden Beugungsstrukturen kann z. B. ein Volumengitter des komplexen Brechungsindex sein. Ein solches Volumengitter kann z. B. durch holographisches Einstellen des komplexen Brechungsindex eines Materials, wie z. B. ein Fotopolymer erzeugt werden, das für das im sichtbaren Spektralbereich der Wellenlänge 380nm ≤ λ ≤ 800nm liegende Licht transparent ist.

Eine räumliche Überlagerung von einer Vielzahl das Licht beugenden Beugungsstrukturkomponenten kann insbesondere in Form von übereinanderliegenden Schichten eines optisch transparenten Materials mit einem modulierten Brechungsindex bestehen, wobei die übereinanderliegenden Schichten auf einem für das sichtbare Licht transparenten Träger aufgebracht sind.

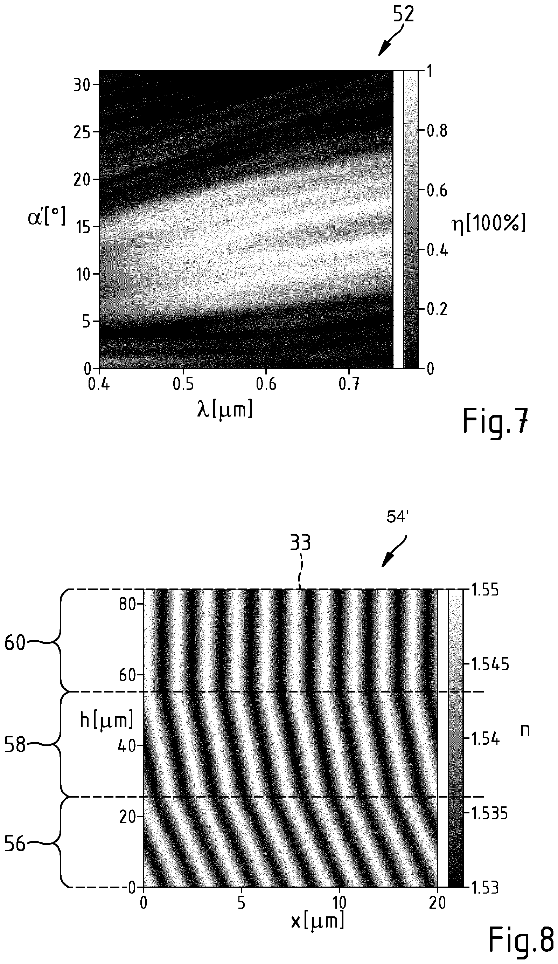

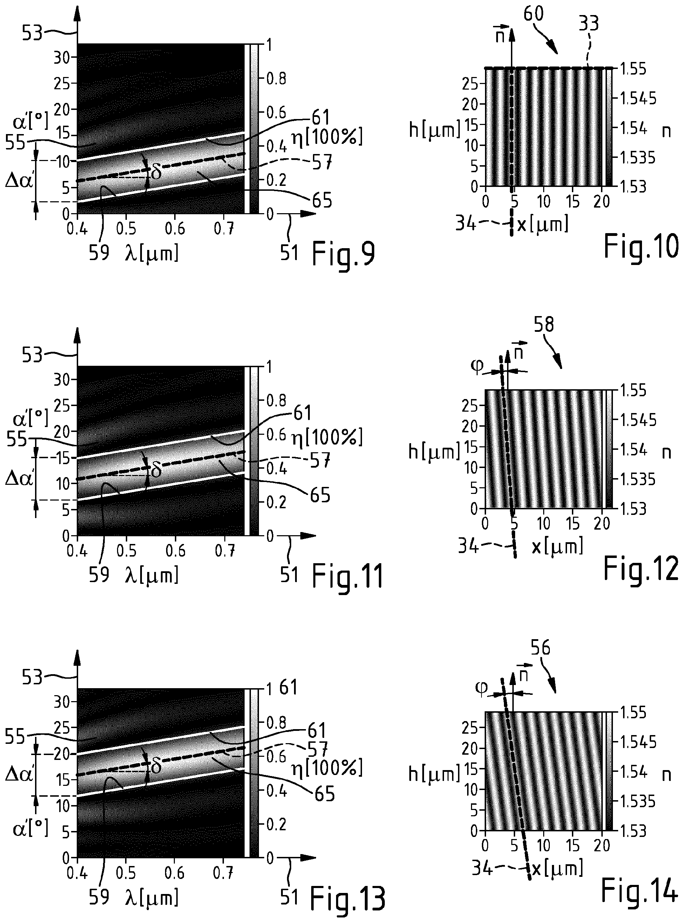

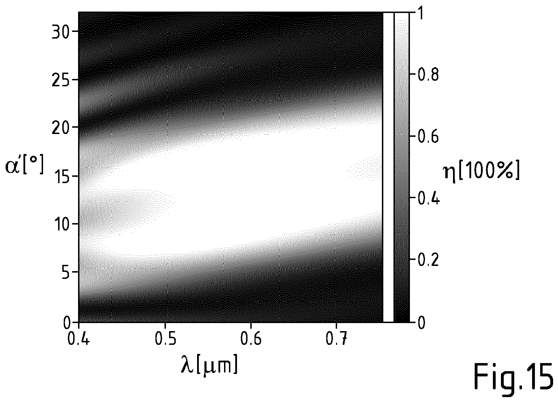

Die Erfinder haben hierzu in umfangreichen Experimenten herausgefunden, dass sich die mit dem Graph 52 in der Fig. 7 als ein Graustufenbild in der von einer Wellenlängen-Parameterachse und einer Einfallswinkel-Parameterachse aufgespannten Parameterebene gezeigte Beugungseffizienz η für das auf die objektseitige Grenzfläche 33 einer Beugungsstruktur 60, die mit einer Beugungsstruktur 56 und einer Beugungsstruktur 58 eine stapelförmige Beugungsstrukturschicht 54' bildet, in guter Näherung als die aus der in der Fig. 15 gezeigten Überlagerung η_{VG} = η_{VG1} + η_{VG2} + η_{VG3} der Beugungseffizienzen η_{VG1}, η_{VG2} und η_{VG3} der Volumengitter VG₁, VG₂, VG₃, ... der in den Fig. 10, Fig. 12 und Fig. 14 gezeigten Beugungsstrukturen 56, 58 und 60 ist, beschreiben lässt.

Erfindungsgemäß haben die Beugungsstrukturen 56, 58, 60 jeweils die Eigenschaft, dass es in der von dem Einfallswinkel a' und der Wellenlänge λ mit einer Wellenlängen-Parameterachse 51 und einer Einfallswinkel-Parameterachse 53 aufgespannten Parameterebene 55 ein entlang einer in Bezug die Wellenlänge λ monoton ansteigenden Gerade 57 erstrecktes Effizienzfenster 65 gibt. In diesem Effizienzfenster 65 wird das unter einem bestimmten Einfallswinkel a' auf das Brillenglas 16, 18 einfallende Licht mittels der Beugungsstrukturen 56, 58, 60 mit der Beugungseffizienz η ≥ 70% in ein und dieselbe Beugungsordnung |m| ≥ 1 gebeugt, wenn das einem Punkt in der Parameterebene 55 entsprechende Parameterpaar [λ,α'] der Wellenlänge λ und des Einfallwinkels a' des Lichts in dem Effizienzfenster 65 liegt.

Die Gerade 57 ist näherungsweise eine Symmetrieachse des Effizienzfensters 65. Die Gerade 57 folgt dabei in etwa einer Linie, die das Effizienzfenster durchsetzt und auf der die Beugungseffizienz in einer diese Linie schneidenden Richtung lokal maximal ist. D. h., das Effizienzfenster 65 ist näherungsweise symmetrisch entlang der Geraden 57 erstreckt. Vorliegend ist das Effizienzfenster 65 zu der Geraden 57 näherungsweise spiegelsymmetrisch. Für die Steigung δ der Geraden 57 in der Fig. 9, Fig. 11 und Fig. 13 gilt vorliegend δ:= 5,3° / 400nm ≈ 0,012 °/nm.

Das Effizienzfenster 65 einer Beugungsstruktur in einem erfindungsgemäßen Brillenglas hat in der Parameterebene 55 die Form einer von einer langgestreckten Ellipse umschlossenen Fläche. In dem Effizienzfenster 65 wird das unter einem bestimmten Einfallswinkel α auf das Brillenglas 16, 18 einfallende Licht mit der Beugungseffizienz η ≥ 70% in ein und dieselbe Beugungsordnung |m| ≥ 1 gebeugt. Das Effizienzfenster 65 einer Beugungsstruktur liegt dabei zwischen einer zu der ansteigenden Geraden 57 parallelen ersten Tangente 59 und einer zu der ersten Tangente 59 parallelen zweiten Tangente 61. Zu der ersten Tangente 59 ist dabei die zweite Tangente 61 jeweils um den Winkel Δα ≈ 3° parallel verschoben.

Der Verlauf eines Effizienzfensters 65 in der Parameterebene 55 lässt sich dabei über die Dicke h des Volumengitters VG einer Beugungsstruktur, die räumlichen Periode des Volumengitters VG, d. h. der Liniendichte 1/Λ des Volumengitters VG, und durch den Neigungswinkel ϕ der periodischen Gitterebenen 34 zu der objektseitigen Grenzfläche 33 eines Volumengitters VG einstellen.

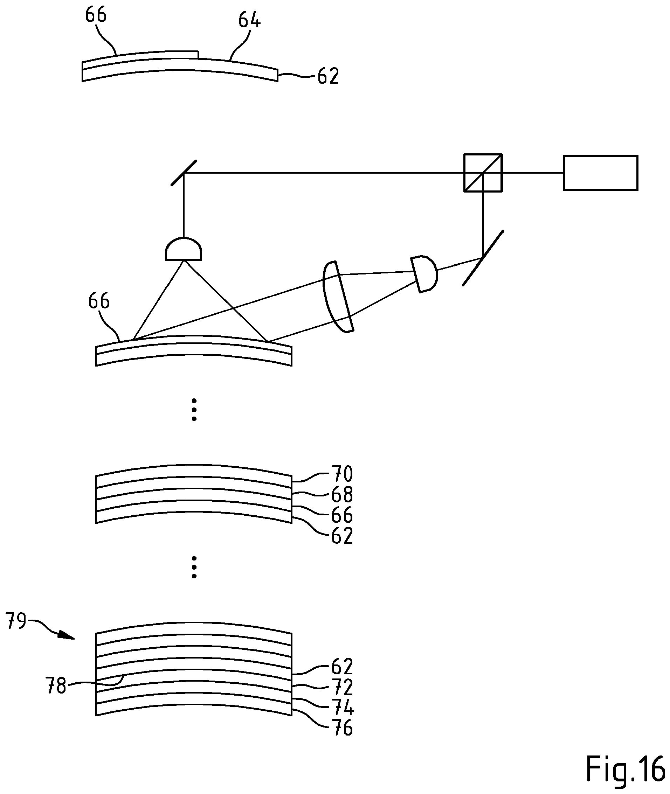

Die Fig. 16 erläutert ein Verfahren für das Herstellen eines Brillenglases 79 mit einem aus übereinanderliegenden Schichten eines optisch transparenten Materials aufgebauten Phasenobjekt, in dem eine Vielzahl von Beugungsstrukturen in Form eines räumlich modulierten Brechungsindex ausgebildet sind.

In einem ersten Schritt wird hierfür ein transparenter Träger 62 bereitgestellt. Auf einer ersten Seite 64 des transparenten Trägers 62 wird dann eine erste transparente Schicht 66 aus einem Fotopolymer mittels Spincoaten, Aufschleudern oder Aufrakeln bzw. Aufspachteln oder Kontaktübertragung von Folien aufgebracht.

In der transparenten Schicht 66 werden darauf in einem folgenden Schritt mit einem holographischen Verfahren eine Vielzahl von Beugungsstrukturen in Form einer räumlichen Modulation des komplexen Brechungsindex mittels Belichten eingebracht.

Dies erfolgt bevorzugt durch das kohärente Überlagern von Licht aus einer Lichtquelle mit dem an einem Referenzobjekt reflektierten Licht dieser Lichtquelle oder mit dem Licht dieser Lichtquelle, nachdem dieses ein Referenzobjekt durchsetzt hat. Alternativ hierzu ist es aber auch möglich, entsprechende Beugungsstrukturen, z. B. Punkt für Punkt mittels eines Laserstrahls in die Materie einzuprägen.

Danach wird mittels Spincoaten oder Aufrakeln auf die Schicht 66 eine weitere transparente Schicht 68 aus einem Fotopolymer aufgebracht. Diese Schicht wird dann ebenfalls, z. B. mit dem vorstehend beschriebenen holografischen Verfahren mit Beugungsstrukturen versehen. Darauf werden die Beugungsstrukturen in der Schicht 68 ebenfalls stabilisiert. Dann wird auf die transparente Schicht 68 eine weitere transparente Schicht 70 aufgebracht, in der wiederum Beugungsstrukturen erzeugt werden und so weiter.

Nach dem Herstellen der übereinanderliegenden Schichten 66, 68, 70 eines optisch transparenten Materials mit darin ausgebildeten Beugungsstrukturen auf der Seite 64 des transparenten Trägers 62 werden dann in der gleichen Weise übereinanderliegende Schichten 72, 74, 76 aus einem optisch transparenten Material mit darin ausgebildeten Beugungsstrukturen auf der anderen Seite 78 des transparenten Trägers 62 erzeugt.

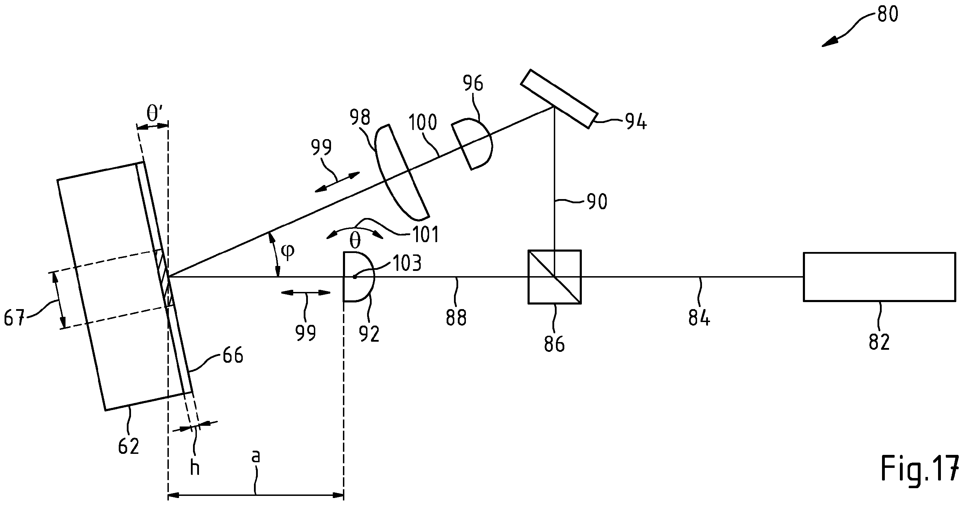

Die Fig. 17 zeigt eine Vorrichtung 80 für das Herstellen von das Licht beugenden Beugungsstrukturen in einer auf einem transparenten Träger 62 aufgebrachten Schicht 66 der Dicke h aus einem Fotopolymer.

Die Vorrichtung 80 enthält eine Lichtquelle, z. B. einen Laser 82, der einen Laserstrahl 84 bereitstellt. Der von dem Laser 82 bereitgestellte Laserstrahl 84 wird mittels eines Strahlteilers 86 in einen ersten Teilstrahlengang 88 und einen weiteren Teilstrahlengang 90 aufgeteilt. Der Teilstrahlengang 88 wird dann durch ein Fokussierobjektiv 92 auf die Schicht 66 gelenkt. Der Teilstrahlengang 90 wird über einen Spiegel 94 entlang der optischen Achse 100 durch ein Fokussierobjektiv 96 und eine Linse 98 geführt und dann dem Teilstrahlengang 88 auf der Schicht 66 in einem Belichtungsbereich 67 kohärent überlagert. Das Fokussierobjektiv 92 kann hier entsprechend den Doppelpfeil 99 linear verlagert und entsprechend dem Doppelpfeil 101 um die Achse 103 verkippt werden, um damit den Abstand α des Fokussierobjektivs 92 von der Schicht 66 und den Winkel ϕ zwischen den optischen Achsen der in der Schicht 66 interferierenden Teilstrahlengänge 88, 90 zu verändern.

Die Vorrichtung 80 erzeugt damit in dem Fotopolymer der Schicht 66 ein Hologramm des Fokussierobjektivs 92. Dieses Hologramm hat eine der Anordnung des Fokussierobjektivs 92 entsprechende optische Übertragungsfunktion. Indem der Interferenzwinkel ϕ, der Kippwinkel θ des Fokussierobjektivs 92, der Kippwinkel θ' des Trägers 62 oder der Abstand α des Fokussierobjektivs 92 von der Schicht 66 verändert wird, kann damit der räumliche Verlauf der Modulation des komplexen Brechungsindex in der Schicht 66 definiert eingestellt werden. Die Periode Λ der erzeugten Beugungsstruktur erfüllt dabei näherungsweise die folgende Beziehung: Λ ∼ sin ϕ / λ, wobei λ die Wellenlänge des von dem Laser 82 bereitgestellten Laserlichts ist. Durch das aufeinanderfolgende Modulieren des Brechungsindex in unterschiedlichen Bereichen der Schicht 66 ist es möglich, in der Schicht 66 verschiedene räumlich voneinander getrennte oder miteinander überlappende Beugungsstrukturen zu erzeugen und eine optische Übertragungsfunktion für diese Schicht einzustellen. Durch aufeinanderfolgendes Erzeugen von Hologrammen in auf den einen Träger 62 aufgebrachten Schichten 66, 68, 70, 72, 74, 76 aus einem Fotopolymer ist es auf diese Weise möglich, eine Brille mit einem Brillenglas bereitzustellen, dessen optische Wirkung durch die Beugung des Lichts an der mittels der Hologramme in den übereinanderlegenden Schichten realisierten Beugungsstrukturen bestimmt ist.

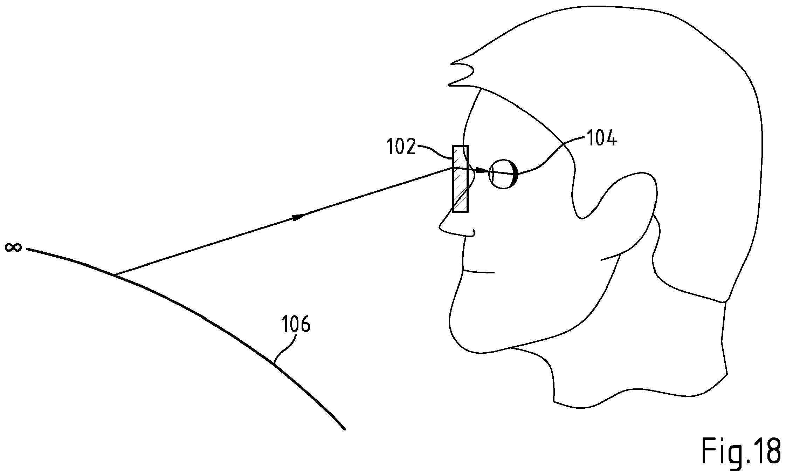

Zu bemerken ist, dass anstelle des Fokussierobjektives 92 in Abbildung 18 auch andere optische Komponenten oder Kombinationen aus optischen Komponenten in der Vorrichtung 80 eingesetzt werden können, z. B. ein Fokussierobjektiv, das mit einem sogenannten Spatial Light Modulator kombiniert ist, oder eine Kombination aus Linsen, die eine die Brennebene verkippende Eigenschaft besitzen. Hierdurch ist es möglich, in einer Schicht 66 nicht nur Beugungsstrukturen mit einer sphärischen Wirkung bereitzustellen, sondern auch Beugungsstrukturen zu realisieren, die unter anderem auch einer Korrektion niederer und höherer Aberrationen des Auges, eine Induzierung niederer und höherer Aberrationen, sowie Vergrößerungen und Modifikationen der Fokustiefe ermöglichen.

Die Fig. 18 erläutert ein Verfahren zum Ermitteln des Designs einer optischen Sehhilfe für eine Beobachtungsperson, die ein Brillenglas 102 mit einem transparenten Körper aufweist, in dem eine Beugungsstruktur für das Erzeugen der optischen Wirkung des Brillenglases durch Ablenken des Lichts mittels Beugung vorgesehen ist.

Um das Design einer solchen optischen Sehhilfe zu ermitteln, wird in einem ersten Schritt eine Bildfläche 104 vorgegeben. In einem weiteren Schritt wird eine Objektfläche 106 und die Position der optischen Sehhilfe definiert. In einem darauffolgenden Schritt wird dann für die Sehhilfe eine optische Übertragungsfunktion vorgegeben, welche die Objektfläche 106 scharf in die Bildfläche 104 abbildet. Diese optische Übertragungsfunktion wird dann durch Berechnen unter Variation der Ablenkung des Lichts aufgrund von Beugung und unter Variation der Beugungseffizienz approximiert.

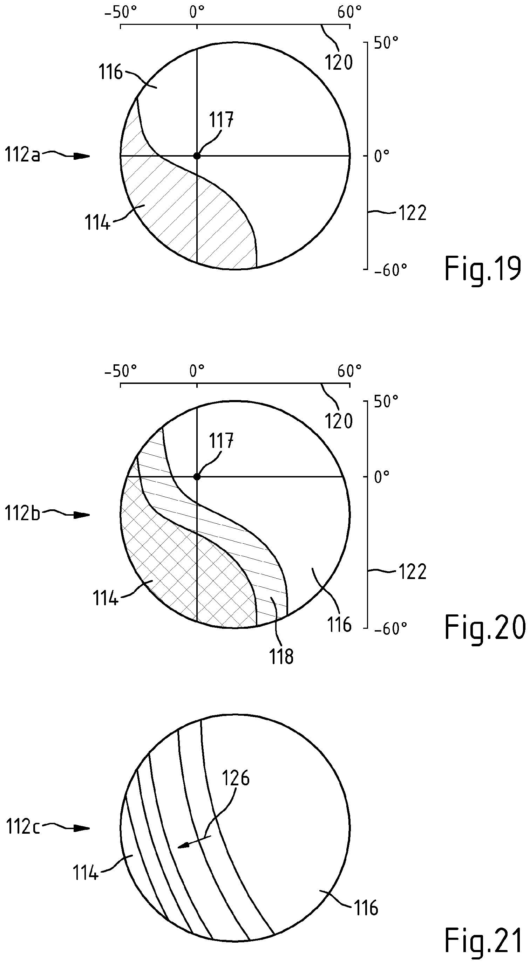

Die Fig. 19 bis Fig. 23 zeigen verschiedene Brillengläser 112a, 112b, 112c, 112d und 112e, die eine Multifokal- bzw. Gleitsichtfunktion haben und die für das Erzeugen der optischen Wirkung eine Vielzahl von Beugungsstrukturen enthalten, wie sie vorstehend beschrieben sind.

Das Brillenglas 112a der Fig. 19 hat ein optisches Zentrum 117, das einer Blickrichtung für Geradeausblick eines Auges eines Betrachters ausgelegt ist, d. h. einer Blickrichtung, in dem das Auge bei einer ergonomisch günstigen Kopfhaltung eine Ruheposition einnimmt. Zu dem Brillenglas 112a in der Fig. 19 ist mit den Achsen 120 und 122 der auf den optischen Drehpunkt des Auges bei Geradeausblick bezogene horizontale und vertikale Sehwinkel kenntlich gemacht. Das Brillenglas 112a weist hier eine erste Sehzone 114 und eine weitere Sehzone 116 auf. Dabei ist die optische Wirkung der Sehzone 114 von der optischen Wirkung der Sehzone 116 verschieden. Für Blickrichtungen, welche die Sehzone 114 durchsetzen, hat das Brillenglas 112a die der Brechkraft B₁₁₄ entsprechende optische Wirkung. In der Sehzone 116 gilt für die Brechkraft B₁₁₆ < B₁₁₄. Die Brechkraft B₁₁₄ des Brillenglases 112a kann z. B. B₁₁₄ = 4 dpt betragen, die Brechkraft B₁₁₆ z. B. B₁₁₆ = 2 dpt.

Die Lage der Sehzonen 114, 116 bei dem in der Fig. 19 gezeigten Brillenglas 112a ermöglichen es, dass wenn die Augen einer Beobachtungsperson eine Vergenzbewegung ausführen, die Beobachtungsperson trotz Presbyopie in einem Nahbereich angeordnete Objekte scharf sehen kann, ohne dass es hierfür einer Akkommodationsfähigkeit der Augen der Beobachtungsperson bedarf.

Zu dem Brillenglas 112b in der Fig. 20 ist mit den Achsen 120 und 122 ebenfalls der auf den optischen Drehpunkt des Auges bei Geradeausblick bezogene horizontale und vertikale Sehwinkel kenntlich gemacht. Das Brillenglas 112b hat das optische Zentrum 117 und weist vorliegend drei unterschiedliche Sehzonen 114, 116, 118 mit verschiedenen optischen Wirkungen auf, die der Brechkraft B₁₁₄ < B₁₁₈ < B₁₁₆ entsprechen.

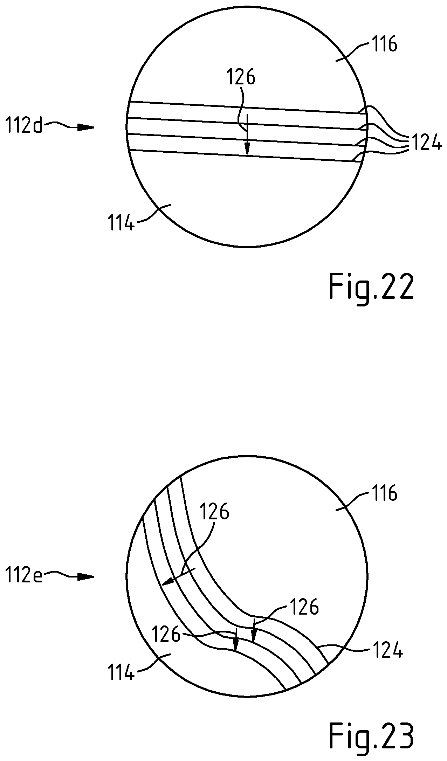

Bei dem in der Fig. 21, der Fig. 22 und der Fig. 23 gezeigten Brillenglas 112c, 112d und 112e ist die optische Wirkung mit Linien 124 gleicher Brechkraft kenntlich gemacht. Die dioptische Wirkung der Brillengläser 112c, 112d und 112e nimmt hier jeweils in der mit dem Pfeil 126 angedeuteten Richtung zu. In den Sehzonen 114 und 116 der in der Fig. 22 und der Fig. 23 gezeigten Brillengläser 112d und 112e ist dabei die optische Wirkung konstant.

Weil die optische Wirkung der vorstehend beschriebenen Brillengläser 112a, 112b, 112c, 112d und 112e mittels der Beugungsstrukturen eingestellt ist, haben diese Sehhilfen, anders als konventionelle, auf der refraktiven Wirkung eines Glaskörpers für Licht basierende Gleitsichtgläser keine Bereiche mit einer astigmatischen Wirkung, die durch den Satz von Minkwitz bedingt ist.

Es sei bemerkt, dass sich die Erfindung auch auf ein Brillenglas erstreckt, bei dem Kombinationen von Merkmalen aus unterschiedlichen der vorstehend beschriebenen Ausführungsbeispiele für Beugungsstrukturen anzutreffen sind.

### Bezugszeichenliste:

- 10: Brille
- 12: Brillengestell
- 16, 18: Brillenglas (optisches Element)
- 19: Träger
- 20, 22: Phasenobjekt
- 23: Brillenglas-Vorderfläche
- 25: Brillenglas-Rückfläche
- 24, 26: Beugungsstruktur
- 27: Auge
- 29: Objektfläche
- 30: Einfallsrichtung
- 31: Aktuator-Kompensator-Paar
- 32: Flächensegment
- 33, 35: Grenzfläche
- 34: Gitterebene
- 36: Netzhaut
- 41: Teilebene
- 42: Kurve
- 43, 45: Linie
- 44: Linie
- 49: Ausbreitungsrichtung
- 50, 52: Pfeil
- 51: Wellenlängen-Parameterachse
- 53: Einfallswinkel-Parameterachse
- 54: Graph
- 54': Beugungsstrukturschicht
- 55: Parameterebene
- 56, 58, 60: Beugungsstruktur
- 57: Gerade
- 59, 61: Tangente
- 62: Träger
- 64: Seite
- 65: Effizienzfenster
- 66, 68, 70, 72, 74, 76: Schicht
- 67: Belichtungsbereich
- 78: Seite
- 79: Brillenglas
- 80: Vorrichtung
- 82: Laser
- 84: Laserstrahl
- 86: Strahlteiler
- 88, 90: Teilstrahlengang
- 92: Fokussierobjektiv
- 94: Spiegel
- 96: Fokussierobjektiv
- 98: Linse
- 100: Achse
- 99, 101: Doppelpfeil
- 102: Brillenglas
- 103: Achse
- 104: Bildfläche
- 106: Objektfläche
- 112a, 112b, 112c, 112d, 112e: Brillenglas
- 114, 116, 118: Sehzonen
- 117: optisches Zentrum
- 120, 122: Achse
- 124: Linie gleicher Brechkraft
- 126: Pfeil

## Patentansprüche

1. Brillenglas (16, 18) für eine Beobachtungsperson mit einem für das Licht transparenten oder wenigstens teilweise transparenten Körper, der ein Phasenobjekt (20) aufweist, welches das auf einer der Beobachtungsperson abgewandten Seite des Brillenglases unter einem Einfallswinkel α zu einer Oberflächennormale *̅n̅*̅ der Brillenglas-Vorderfläche (23) einfallende Licht in eine von der Wellenlänge λ des Lichts und von dem Einfallswinkel α des Lichts abhängige Richtung lenkt,
**dadurch gekennzeichnet, dass**
das Phasenobjekt (20) eine von der Blickrichtung abhängige, das Licht ablenkende Wirkung hat und eine Vielzahl von Beugungsstrukturen (24, 26, 56, 58, 60) aufweist, mittels der monochromatisches Licht der Wellenlänge 380nm ≤ λ ≤ 800nm mit der Beugungseffizienz η ≥ 70% in ein und dieselbe Beugungsordnung |m| ≥ 1 gebeugt wird, wenn das monochromatische Licht unter dem Einfallswinkel α zu einer Oberflächennormale *̅n̅*̅ der Brillenglas-Vorderfläche (23) an der von der Blickrichtung durchsetzten Stelle auf die der Beobachtungsperson abgewandte Seite des Brillenglases einfällt, der innerhalb eines 15° breiten, von der Wellenlänge des Lichts abhängigen beugungsstrukturspezifischen Winkelintervalls liegt, wobei eine jede Beugungsstruktur (24) mit einer von der Beugungsstruktur (24) räumlich getrennten weiteren Beugungsstruktur (26) ein Aktuator-Kompensator-Paar (31) bildet, wobei sich die von den ein Aktuator-Kompensator-Paar (31) bildenden Beugungsstrukturen (24, 26) hervorgerufenen Ablenkungen des auf die der Beobachtungsperson abgewandte Seite einfallenden Lichts wenigstens teilweise aufheben, wobei eine jede Beugungsstruktur (24, 26) nur dasjenige Licht beugt, dessen Wellenlänge λ in einem bestimmten Wellenlängenbereich λ₀ ± Δλ liegt und das unter einem auf eine objektseitige Grenzfläche (35, 33) der Beugungsstruktur (24, 26) bezogenen Einfallswinkel a' auf die Beugungsstruktur (24, 26) trifft, der in einem bestimmten beugungsstrukturspezifischen Einfallswinkelbereich α₀ ± Δα liegt, wobei das von einem jeden Flächensegment (32) einer vorgegebenen Objektfläche (29) herrührende Licht mittels eines Aktuator-Kompensator-Paars (31) oder mittels mehrerer Aktuator-Kompensator-Paare (31) so gebeugt wird, dass auf der Netzhaut (36) eines Auges (27) der Beobachtungsperson ein scharfes Bild des betreffenden Flächensegments (32) der Objektfläche (29) entstehen kann, und wobei der Körper des Brillenglases (112a, 112b, 112c, 112d, 112e) einen Rand hat und zwei oder mehr zusammenhängende, sich über den Körper erstreckende und den Körper dabei zumindest teilweise überdeckende Sehzonen (114, 116) mit einer unterschiedlichen mittels der Beugungsstrukturen eingestellten optischen Wirkung aufweist, wobei der Körper keine Bereiche mit einem durch den Satz von Minkwitz bedingten Astigmatismus hat.

2. Brillenglas nach Anspruch 1, **dadurch gekennzeichnet, dass** eine jede Beugungsstruktur (24, 26, 56, 58, 60) sämtliches Licht einer in einem beugungsstrukturspezifischen Wellenlängenintervall λ₀ ± 0,1 µm liegenden beugungsstrukturspezifischen Wellenlänge λ, das unter einem in einem beugungsstrukturspezifischen Einfallswinkelbereich α₀ ± 2,5° liegenden Einfallswinkel α auf die der Beobachtungsperson abgewandte Seite des Brillenglases auftrifft, mit der Beugungseffizienz η ≥ 70% in ein und dieselbe Beugungsordnung |m| ≥ 1 beugt.

3. Brillenglas nach Anspruch 1 oder 2, **dadurch gekennzeichnet, dass** die Beugungsstrukturen (24, 26, 56, 58, 60) in der von dem Einfallswinkel α und der Wellenlänge λ mit einer Wellenlängen-Parameterachse (51) und einer Einfallswinkel-Parameterachse (53) aufgespannten Parameterebene (55) jeweils ein entlang einer in Bezug die Wellenlänge λ monoton ansteigenden Gerade (57) erstrecktes Effizienzfenster (65) haben, in dem das unter einem bestimmten Einfallswinkel α auf die der Beobachtungsperson abgewandte Seite des Brillenglases einfallende Licht mit der Beugungseffizienz η ≥ 70% in ein und dieselbe Beugungsordnung |m| ≥ 1 gebeugt wird, wenn das einem Punkt in der Parameterebene (55) entsprechende Parameterpaar [α, λ] der Wellenlänge λ und des Einfallwinkels a des Lichts in dem Effizienzfenster (65) liegt.

4. Brillenglas nach Anspruch 3, **dadurch gekennzeichnet, dass** für die Steigung δ der Geraden (57) gilt δ ≤ 0,036 °/nm, oder dass für die Steigung δ der Geraden (57) gilt δ ≤ 0,024 °/nm, oder dass für die Steigung δ der Geraden (57) gilt δ ≤ 0,012 °/nm.

5. Brillenglas nach Anspruch 1 oder 2, **dadurch gekennzeichnet, dass** die Beugungsstrukturen (24, 26, 56, 58, 60) in der von dem Einfallswinkel α und der Wellenlänge λ mit einer Wellenlängen-Parameterachse (51) und einer Einfallswinkel-Parameterachse (53) aufgespannten Parameterebene (55) jeweils ein entlang einer in Bezug die Wellenlänge λ monoton ansteigenden Gerade (57) zwischen einer zu der ansteigenden Geraden (57) parallelen erste Tangente (59) und einer zu der ersten Tangente (59) in der Richtung der Einfallswinkel-Parameterachse (53) um den Winkel Δα ≤ 20° parallel verschobene zweite Tangente (61) erstrecktes Effizienzfenster (65) haben, in dem das unter einem bestimmten Einfallswinkel α auf die der Beobachtungsperson abgewandte Seite des Brillenglases einfallende Licht mit der Beugungseffizienz η ≥ 70% in ein und dieselbe Beugungsordnung |m| ≥ 1 gebeugt wird, wenn das einem Punkt in der Parameterebene (55) entsprechende Parameterpaar [α, λ] der Wellenlänge λ und des Einfallwinkels a des Lichts in dem Effizienzfenster (65) liegt, oder
dass die Beugungsstrukturen (24, 26, 56, 58, 60) in der von dem Einfallswinkel α und der Wellenlänge λ mit einer Wellenlängen-Parameterachse (51) und einer Einfallswinkel-Parameterachse (53) aufgespannten Parameterebene (55) jeweils ein entlang einer in Bezug die Wellenlänge λ monoton ansteigenden Gerade (57) zwischen einer zu der ansteigenden Geraden (57) parallelen erste Tangente (59) und einer zu der ersten Tangente (59) in der Richtung der Einfallswinkel-Parameterachse (53) um den Winkel Δα ≤ 15° parallel verschobene zweite Tangente (61) erstrecktes Effizienzfenster (65) haben, in dem das unter einem bestimmten Einfallswinkel α auf die der Beobachtungsperson abgewandte Seite des Brillenglases einfallende Licht mit der Beugungseffizienz η ≥ 70% in ein und dieselbe Beugungsordnung |m| ≥ 1 gebeugt wird, wenn das einem Punkt in der Parameterebene (55) entsprechende Parameterpaar [α, λ] der Wellenlänge λ und des Einfallwinkels a des Lichts in dem Effizienzfenster (65) liegt, oder
dass die Beugungsstrukturen (24, 26, 56, 58, 60) in der von dem Einfallswinkel α und der Wellenlänge λ mit einer Wellenlängen-Parameterachse (51) und einer Einfallswinkel-Parameterachse (53) aufgespannten Parameterebene (55) jeweils ein entlang einer in Bezug die Wellenlänge λ monoton ansteigenden Gerade (57) zwischen einer zu der ansteigenden Geraden (57) parallelen erste Tangente (59) und einer zu der ersten Tangente (59) in der Richtung der Einfallswinkel-Parameterachse (53) um den Winkel Δα ≤ 10° oder Δα ≤ 6° parallel verschobene zweite Tangente (61) erstrecktes Effizienzfenster (65) haben, in dem das unter einem bestimmten Einfallswinkel α auf die der Beobachtungsperson abgewandte Seite des Brillenglases einfallende Licht mit der Beugungseffizienz η ≥ 70% in ein und dieselbe Beugungsordnung |m| ≥ 1 gebeugt wird, wenn das einem Punkt in der Parameterebene (55) entsprechende Parameterpaar [α, λ] der Wellenlänge λ und des Einfallwinkels a des Lichts in dem Effizienzfenster (65) liegt.

6. Brillenglas nach einem der Ansprüche 3 bis 5, **dadurch gekennzeichnet, dass** das Effizienzfenster (65) symmetrisch entlang der Geraden (57) erstreckt ist, und/oder dass die Gerade (57), entlang der das Effizienzfenster (65) erstreckt ist, näherungsweise einer das Effizienzfenster (65) durchsetzenden Linie folgt, auf der die Beugungseffizienz η maximal ist.

7. Brillenglas nach einem der Ansprüche 1 bis 6, **dadurch gekennzeichnet, dass** eine jede Beugungsstruktur (24, 26) als eine Modulation des komplexen Brechungsindex n(λ; x,y,z) := nᵣ(λ; x,y,z) + inᵢ(λ; x,y,z) des Körpers in wenigstens einer Raumrichtung ausgebildet ist, wobei die Amplitude Δn(λ) der Modulation des komplexen Brechungsindex n(λ; x,y,z) der folgenden Beziehung für Licht der Wellenlänge 400 nm ≤ λ ≤ 800 nm genügt: 0,01 ≤|Δn(λ)| ≤ 0,05.

8. Brillenglas nach einem der Ansprüche 1 bis7, **dadurch gekennzeichnet, dass** das Phasenobjekt (20) eine Linsenwirkung hat.

9. Brillenglas nach einem der Ansprüche 1 bis 8, **dadurch gekennzeichnet, dass** das Phasenobjekt übereinanderliegende Schichten (66, 68, 70) eines optisch transparenten Materials mit moduliertem Brechungsindex umfasst, wobei die übereinanderliegenden Schichten (66, 68, 70) auf einem für das sichtbare Licht transparenten Träger (62) aufgebracht sind.

10. Brillenglas nach einem der Ansprüche 1 bis 9, **dadurch gekennzeichnet, dass** zusätzlich zu der das Licht beugenden Wirkung eine das Licht brechende Wirkung vorhanden ist.

11. Brillenglas nach einem der Ansprüche 1 bis 10, **dadurch gekennzeichnet, dass** das Brillenglas ein progressives Brillenglas ist.

12. Verfahren zum Ermitteln des Designs eines Brillenglases, bei dem
für das Brillenglas (102) eine Geometrie und eine optische Übertragungsfunktion vorgegeben wird;
**dadurch gekennzeichnet, dass**
eine Objektfläche (29) mit einer Vielzahl von Flächensegmenten (32) vorgegeben wird und für die vorgegebene optische Übertragungsfunktion und die vorgegebene Geometrie ein Phasenobjekt mit einer von der Blickrichtung abhängigen, das Licht ablenkenden Wirkung berechnet wird, das eine Vielzahl von Beugungsstrukturen aufweist, mittels der monochromatisches Licht der Wellenlänge 380nm ≤ λ ≤ 800nm mit der Beugungseffizienz η ≥ 70% in ein und dieselbe Beugungsordnung |m| ≥ 1 gebeugt wird, wenn das monochromatische Licht unter dem Einfallswinkel α zu einer Oberflächennormale *̅n̅*̅ der Brillenglas-Vorderfläche (23) an der von der Blickrichtung durchsetzten Stelle auf die der Beobachtungsperson abgewandte Seite des Brillenglases einfällt, der innerhalb eines 15° breiten, von der Wellenlänge des Lichts abhängigen beugungsstrukturspezifischen Winkelintervalls liegt, wobei
das Phasenobjekt eine diffraktive Wirkung f(θₐ) hat, die zusammen mit der refraktiven Wirkung des Brillenglases (102) die vorgegebene optische Übertragungsfunktion zumindest approximiert, und wobei eine jede Beugungsstruktur (24) mit einer von der Beugungsstruktur (24) räumlich getrennten weiteren Beugungsstruktur (26) ein Aktuator-Kompensator-Paar (31) bildet, wobei sich die von den ein Aktuator-Kompensator-Paar (31) bildenden Beugungsstrukturen (24, 26) hervorgerufenen Ablenkungen des auf die der Beobachtungsperson abgewandte Seite einfallenden Lichts wenigstens teilweise aufheben, wobei eine jede Beugungsstruktur (24, 26) nur dasjenige Licht beugt, dessen Wellenlänge λ in einem bestimmten Wellenlängenbereich λ₀ ± Δλ liegt und das unter einem auf eine objektseitige Grenzfläche (35, 33) der Beugungsstruktur (24, 26) bezogenen Einfallswinkel a' auf die Beugungsstruktur (24, 26) trifft, der in einem bestimmten beugungsstrukturspezifischen Einfallswinkelbereich ao ± Δα liegt, und wobei das von einem jeden Flächensegment (32) einer vorgegebenen Objektfläche (29) herrührende Licht mittels eines Aktuator-Kompensator-Paars (31) oder mittels mehrerer Aktuator-Kompensator-Paare (31) so gebeugt wird, dass auf der Netzhaut (36) eines Auges (27) der Beobachtungsperson ein scharfes Bild des betreffenden Flächensegments (32) der Objektfläche (29) entstehen kann.

13. Verfahren nach Anspruch 12, **dadurch gekennzeichnet, dass** die vorgegebene optische Übertragungsfunktion zumindest einen Sehfehler der Beobachtungsperson wenigstens teilweise kompensiert.

14. Herstellungsverfahren für ein Brillenglas mit einem transparenten Träger (62), auf dem eine optische Schicht (66) oder mehrere optische Schichten (66, 68, 70) aufgebracht sind,
bei dem ein transparenter Träger (62) bereitgestellt wird;
bei dem auf dem transparenten Träger (62) mehrere optische Schichten (66, 68, 70) aus einem Fotopolymer aufgebracht werden; und
bei dem in einer jeden optischen Schicht (66, 68, 70) ein Hologramm eines in einer definierten Position in Bezug auf die optische Schicht angeordneten optischen Elements (98) erzeugt wird,
**dadurch gekennzeichnet, dass**
auf dem optischen Träger (62) dabei ein Phasenobjekt mit einer von der Blickrichtung abhängigen, das Licht ablenkenden Wirkung generiert wird, das eine Vielzahl von Beugungsstrukturen aufweist, mittels der monochromatisches Licht der Wellenlänge 380nm ≤ λ ≤ 800nm mit der Beugungseffizienz η ≥ 70% in ein und dieselbe Beugungsordnung |m| ≥ 1 gebeugt wird, wenn das monochromatische Licht unter dem Einfallswinkel α zu einer Oberflächennormale *̅n̅*̅ der Brillenglas-Vorderfläche (23) an der von der Blickrichtung durchsetzten Stelle auf die der Beobachtungsperson abgewandte Seite des Brillenglases einfällt, der innerhalb eines 15° breiten, von der Wellenlänge des Lichts abhängigen beugungsstrukturspezifischen Winkelintervalls liegt, wobei eine jede Beugungsstruktur (24) mit einer von der Beugungsstruktur (24) räumlich getrennten weiteren Beugungsstruktur (26) ein Aktuator-Kompensator-Paar (31) bildet, und wobei sich die von den ein Aktuator-Kompensator-Paar (31) bildenden Beugungsstrukturen (24, 26) hervorgerufenen Ablenkungen des auf die der Beobachtungsperson abgewandte Seite einfallenden Lichts wenigstens teilweise aufheben, wobei eine jede Beugungsstruktur (24, 26) nur dasjenige Licht beugt, dessen Wellenlänge λ in einem bestimmten Wellenlängenbereich λ₀ ± Δλ liegt und das unter einem auf eine objektseitige Grenzfläche (35, 33) der Beugungsstruktur (24, 26) bezogenen Einfallswinkel a' auf die Beugungsstruktur (24, 26) trifft, der in einem bestimmten beugungsstrukturspezifischen Einfallswinkelbereich α₀ ± Δα liegt, und wobei das von einem jeden Flächensegment (32) einer vorgegebenen Objektfläche (29) herrührende Licht mittels eines Aktuator-Kompensator-Paars (31) oder mittels mehrerer Aktuator-Kompensator-Paare (31) so gebeugt wird, dass auf der Netzhaut (36) eines Auges (27) der Beobachtungsperson ein scharfes Bild des betreffenden Flächensegments (32) der Objektfläche (29) entstehen kann.

## Claims

1. Spectacle lens (16, 18) for an observer, comprising a body which is transparent or at least partly transparent to light and has a phase object (20) which guides the light incident at an angle of incidence α, in relation to a surface normal *̅n̅*̅ of the spectacle lens front surface (23), on a side of the spectacle lens distant from the observer into a direction depending on the wavelength λ of the light and the angle of incidence α of the light,
**characterized in that**
the phase object (20) has a light-deflecting effect which is dependent on the viewing direction and has a multiplicity of diffraction structures (24, 26, 56, 58, 60), by means of which monochromatic light at a wavelength of 380 nm ≤ λ ≤ 800 nm is diffracted with a diffraction efficiency of η ≥ 70% into one and same order of diffraction |m| ≥ 1 when the monochromatic light is incident at the angle of incidence α, in relation to a surface normal *̅n̅*̅ of the spectacle lens front surface (23) at the position passed by the viewing direction, on the side of the spectacle lens distant from the observer which lies within a diffraction-structure-specific angle interval which is 15° wide and depends on the wavelength of the light, wherein each diffraction structure (24) forms an actuator-compensator pair (31) with a further diffraction structure (26) which is spatially separate from the diffraction structure (24), wherein the deflections of the light incident on the side distant from the observer caused by the diffraction structures (24, 26) forming an actuator-compensator pair (31) are at least partly canceled, wherein every diffraction structure (24, 26) only diffracts the light whose wavelength λ lies in a specific wavelength range λ₀ ± Δλ and which is incident on the diffraction structure (24, 26), in relation to an object-side boundary (35, 33) of the diffraction structure (24, 26), at an angle of incidence α' lying in a specific diffraction-structure-specific angle of incidence range α₀ ± Δα, wherein the light which originates from each surface segment (32) of a predetermined object surface (29) is diffracted by means of one actuator-compensator pair (31) or by means of a plurality of actuator-compensator pairs (31) in such a way that a sharp image of the relevant surface segment (32) of the object surface (29) may arise on the retina (36) of an eye (27) of the observer, and wherein the body of the spectacle lens (112a, 112b, 112c, 112d, 112e) has an edge and two or more connected visual zones (114, 116) which have a different optical effect which is set by means of the diffraction structures, extend over the body and at least partly cover the body in the process, wherein the body has no regions with an astigmatism caused by the Minkwitz theorem.

2. Spectacle lens according to Claim 1, **characterized in that** each diffraction structure (24, 26, 56, 58, 60) diffracts all light of a diffraction-structure-specific wavelength λ lying in a diffraction-structure-specific wavelength interval λ₀ ± 0.1 µm, said wavelength being incident at an angle of incidence α which lies in a diffraction-structure-specific angle of incidence range α₀ ± 2.5° on the side of the spectacle lens distant from the observer, with the diffraction efficiency of η ≥ 70% into one and same order of diffraction |m| ≥ 1.

3. Spectacle lens according to Claim 1 or 2, **characterized in that** the diffraction structures (24, 26, 56, 58, 60) in the parameter plane (55) spanned by the angle of incidence α and the wavelength λ with a wavelength parameter axis (51) and an angle of incidence parameter axis (53) each have an efficiency window (65) extending along a straight line (57), which increases monotonically in relation to the wavelength λ, in which efficiency window the light incident at a specific angle of incidence α on the side of the spectacle lens distant from the observer is diffracted with the diffraction efficiency of η ≥ 70% into one and same order of diffraction |m| ≥ 1 when the parameter pair [α, λ] of the wavelength λ and the angle of incidence α of the light, corresponding to a point in the parameter plane (55), lies in the efficiency window (65).

4. Spectacle lens according to Claim 3, **characterized in that** δ ≤ 0.036 °/nm applies to the gradient δ of the straight line (57) or **in that** δ ≤ 0.024 °/nm applies to the gradient δ of the straight line (57) or **in that** δ ≤ 0.012 °/nm applies to the gradient δ of the straight line (57).

5. Spectacle lens according to Claim 1 or 2, **characterized in that** the diffraction structures (24, 26, 56, 58, 60) in the parameter plane (55) spanned by the angle of incidence α and the wavelength λ with a wavelength parameter axis (51) and an angle of incidence parameter axis (53) each have an efficiency window (65) extending along a straight line (57), which increases monotonically in relation to the wavelength λ, between a first tangent (59) parallel to the increasing straight line (57) and a second tangent (61) displaced in parallel to the first tangent (59) in the direction of the angle of incidence parameter axis (53) by the angle Δα ≤ 20°, in which efficiency window the light incident at a specific angle of incidence α on the side of the spectacle lens distant from the observer is diffracted with the diffraction efficiency of η ≥ 70% into one and same order of diffraction |m| ≥ 1 when the parameter pair [α, λ] of the wavelength λ and the angle of incidence α of the light, corresponding to a point in the parameter plane (55), lies in the efficiency window (65), or
**in that** the diffraction structures (24, 26, 56, 58, 60) in the parameter plane (55) spanned by the angle of incidence α and the wavelength λ with a wavelength parameter axis (51) and an angle of incidence parameter axis (53) each have an efficiency window (65) extending along a straight line (57), which increases monotonically in relation to the wavelength λ, between a first tangent (59) parallel to the increasing straight line (57) and a second tangent (61) displaced in parallel to the first tangent (59) in the direction of the angle of incidence parameter axis (53) by the angle Δα ≤ 15°, in which efficiency window the light incident at a specific angle of incidence α on the side of the spectacle lens distant from the observer is diffracted with the diffraction efficiency of η ≥ 70% into one and same order of diffraction |m| ≥ 1 when the parameter pair [α, λ] of the wavelength λ and the angle of incidence α of the light, corresponding to a point in the parameter plane (55), lies in the efficiency window (65), or
**in that** the diffraction structures (24, 26, 56, 58, 60) in the parameter plane (55) spanned by the angle of incidence α and the wavelength λ with a wavelength parameter axis (51) and an angle of incidence parameter axis (53) each have an efficiency window (65) extending along a straight line (57), which increases monotonically in relation to the wavelength λ, between a first tangent (59) parallel to the increasing straight line (57) and a second tangent (61) displaced in parallel to the first tangent (59) in the direction of the angle of incidence parameter axis (53) by the angle Δα ≤ 10° or Δα ≤ 6°, in which efficiency window the light incident at a specific angle of incidence α on the side of the spectacle lens distant from the observer is diffracted with the diffraction efficiency of η ≥ 70% into one and same order of diffraction |m| ≥ 1 when the parameter pair [α, λ] of the wavelength λ and the angle of incidence α of the light, corresponding to a point in the parameter plane (55), lies in the efficiency window (65) .

6. Spectacle lens according to one of Claims 3 to 5, **characterized in that** the efficiency window (65) extends symmetrically along the straight line (57) and/or **in that** the straight line (57), along which the efficiency window (65) extends, approximately follows a line passing through the efficiency window (65) on which the diffraction efficiency η is at a maximum.

7. Spectacle lens according to one of Claims 1 to 6, **characterized in that** each diffraction structure (24, 26) is embodied as a modulation of the complex refractive index η(λ; x,y,z) := nᵣ(λ; x,y,z) + inᵢ(λ; x,y,z) of the body in at least one spatial direction, wherein the amplitude Δη(λ) of the modulation of the complex refractive index n(λ; x,y,z) satisfies the following relationship for light of the wavelength 400 nm ≤ λ ≤ 800 nm: 0.01 ≤|*Δn*(λ)| ≤ 0.05.

8. Spectacle lens according to one of Claims 1 to 7, **characterized in that** the phase object (20) has a lens effect.

9. Spectacle lens according to one of Claims 1 to 8, **characterized in that** the phase object comprises layers (66, 68, 70), lying one above the other, of an optically transparent material with a modulated refractive index, wherein the layers (66, 68, 70) lying one above the other are applied to a carrier (62) transparent to the visible light.

10. Spectacle lens according to one of Claims 1 to 9, **characterized in that** a light-refracting effect is present in addition to the light-diffracting effect.

11. Spectacle lens according to one of Claims 1 to 10, **characterized in that** the spectacle lens is a progressive spectacle lens.

12. Method for establishing the design of a spectacle lens, in which
a geometry and an optical transfer function are predetermined for the spectacle lens (102);
**characterized in that**
an object surface (29) with a multiplicity of surface segments (32) is predetermined and a phase object which has a light-deflecting effect which is dependent on the viewing direction and has a multiplicity of diffraction structures is calculated for the predetermined optical transfer function and the predetermined geometry, by means of which diffraction structures monochromatic light at a wavelength of 380 nm ≤ λ ≤ 800 nm is diffracted with a diffraction efficiency of η ≥ 70% into one and same order of diffraction |m| ≥ 1 when the monochromatic light is incident at the angle of incidence α, in relation to a surface normal *̅n̅*̅ of the spectacle lens front surface (23) at the position passed by the viewing direction, on the side of the spectacle lens distant from the observer which lies within a diffraction-structure-specific angle interval which is 15° wide and depends on the wavelength of the light, wherein
the phase object has a diffractive effect f(θₐ) which, together with the refractive effect of the spectacle lens (102), at least approximates the predetermined optical transfer function, and wherein each diffraction structure (24) forms an actuator-compensator pair (31) with a further diffraction structure (26) which is spatially separate from the diffraction structure (24), wherein the deflections of the light incident on the side distant from the observer caused by the diffraction structures (24, 26) forming an actuator-compensator pair (31) are at least partly canceled, wherein every diffraction structure (24, 26) only diffracts the light whose wavelength λ lies in a specific wavelength range λ₀ ± Δλ and which is incident on the diffraction structure (24, 26), in relation to an object-side boundary (35, 33) of the diffraction structure (24, 26), at an angle of incidence α' lying in a specific diffraction-structure-specific angle of incidence range α₀ ± Δα, and wherein the light which originates from each surface segment (32) of a predetermined object surface (29) is diffracted by means of one actuator-compensator pair (31) or by means of a plurality of actuator-compensator pairs (31) in such a way that a sharp image of the relevant surface segment (32) of the object surface (29) may arise on the retina (36) of an eye (27) of the observer.

13. Method according to Claim 12, **characterized in that** the predetermined optical transfer function at least partly compensates at least one visual impairment of the observer.

14. Production method for a spectacle lens comprising a transparent carrier (62), on which an optical layer (66) or a plurality of optical layers (66, 68, 70) are applied,
in which a transparent carrier (62) is provided;
in which a plurality of optical layers (66, 68, 70) made of a photopolymer are applied onto the transparent carrier (62); and
in which a hologram of an optical element (98) arranged in a defined position in relation to the optical layer is generated in each optical layer (66, 68, 70),
**characterized in that**
a phase object which has a light-deflecting effect depending on the viewing direction and has a multiplicity of diffraction structures is generated on the optical carrier (62) in the process, said phase object having a plurality of diffraction structures, by means of which diffraction structures monochromatic light at a wavelength of 380 nm ≤ λ ≤ 800 nm is diffracted with a diffraction efficiency of η ≥ 70% into one and same order of diffraction |m| ≥ 1 when the monochromatic light is incident at the angle of incidence α, in relation to a surface normal *̅n̅*̅ of the spectacle lens front surface (23) at the position passed by the viewing direction, on the side of the spectacle lens distant from the observer which lies within a diffraction-structure-specific angle interval which is 15° wide and depends on the wavelength of the light, wherein each diffraction structure (24) forms an actuator-compensator pair (31) with a further diffraction structure (26) which is spatially separate from the diffraction structure (24), and wherein the deflections of the light incident on the side distant from the observer caused by the diffraction structures (24, 26) forming an actuator-compensator pair (31) are at least partly canceled, wherein every diffraction structure (24, 26) only diffracts the light whose wavelength λ lies in a specific wavelength range λ₀ ± Δλ and which is incident on the diffraction structure (24, 26), in relation to an object-side boundary (35, 33) of the diffraction structure (24, 26), at an angle of incidence α' lying in a specific diffraction-structure-specific angle of incidence range α₀ ± Δα, and wherein the light which originates from each surface segment (32) of a predetermined object surface (29) is diffracted by means of one actuator-compensator pair (31) or by means of a plurality of actuator-compensator pairs (31) in such a way that a sharp image of the relevant surface segment (32) of the object surface (29) may arise on the retina (36) of an eye (27) of the observer.

## Revendications

1. Verre de lunette (16, 18) pour un observateur comprenant un corps transparent ou au moins partiellement transparent pour la lumière, lequel possède un objet de phase (20) qui dirige la lumière, qui est incidente sur un côté du verre de lunette à l'opposé de l'observateur sous un angle d'incidence α par rapport à une normale à la surface *̅n̅*̅ de la face avant du verre de lunette (23), dans une direction qui dépend de la longueur d'onde λ de la lumière et de l'angle d'incidence α de la lumière, **caractérisé en ce que**
l'objet de phase (20) a un effet de déviation de la lumière dépendant de la direction du regard et possède une pluralité de structures de diffraction (24, 26, 56, 58, 60) au moyen desquelles la lumière monochromatique ayant la longueur d'onde 380 nm ≤ λ ≤ 800 nm est diffractée avec l'efficacité de diffraction η ≥ 70 % dans un seul et même ordre de diffraction |m| ≥ 1 lorsque la lumière monochromatique est incidente sous l'angle d'incidence α par rapport à une normale à la surface *̅n̅*̅ de la face avant du verre de lunette (23) au niveau de l'endroit traversé par la direction du regard sur le côté du verre de lunette à l'opposé de l'observateur, lequel est compris dans un intervalle d'angles de 15° de large, spécifique à la structure de diffraction et dépendant de la longueur d'onde de la lumière, chaque structure de diffraction (24) formant avec une structure de diffraction (26) supplémentaire, séparée dans l'espace de la structure de diffraction (24), une paire actionneur-compensateur (31), les déviations, provoquées par les structures de diffraction (24, 26) qui forment une paire actionneur-compensateur (31), de la lumière incidente sur le côté à l'opposé de l'observateur s'annulant au moins partiellement, chaque structure de diffraction (24, 26) ne diffractant que la lumière dont la longueur d'onde λ est comprise dans une plage de longueurs d'onde λ₀ ± Δλ donnée et qui est incidente sur la structure de diffraction (24, 26) sous un angle d'incidence α' rapporté à une surface limite côté objet (35, 33) de la structure de diffraction (24, 26), lequel est compris dans une plage d'angles d'incidence α₀ ± Δα donnée, spécifique à la structure de diffraction, la lumière provenant de chaque segment de surface (32) d'une surface d'objet (29) prédéfinie étant diffractée au moyen d'une paire actionneur-compensateur (31) ou au moyen de plusieurs paires actionneur-compensateur (31) de telle sorte qu'une image nette du segment de surface (32) concerné de la surface d'objet (29) peut se former sur la rétine (36) d'un oeil (27) de l'observateur, et le corps du verre de lunette (112a, 112b, 112c, 112d, 112e) comprenant un bord et possédant au moins deux zones de vision (114, 116) connexes, qui s'étendent sur le corps et recouvrent ainsi au moins partiellement le corps, lesquelles ont un effet optique différent réglé au moyen des structures de diffraction, le corps ne possédant aucune zone ayant un astigmatisme dû au théorème de Minkwitz.

2. Verre de lunette selon la revendication 1, **caractérisé en ce que** chaque structure de diffraction (24, 26, 56, 58, 60) diffracte la totalité de la lumière d'une longueur d'onde λ spécifique à la structure de diffraction, se trouvant dans un intervalle de longueurs d'onde λ₀ ± 0,1 spécifique à la structure de diffraction, qui est incidente sur le côté du verre de lunette à l'opposé de l'observateur sous un angle d'incidence α compris dans une plage d'angles d'incidence α₀ ± 2,5° spécifique à la structure de diffraction, avec l'efficacité de diffraction η ≥ 70 % dans un seul et même ordre de diffraction |m| ≥ 1.

3. Verre de lunette selon la revendication 1 ou 2, **caractérisé en ce que** les structures de diffraction (24, 26, 56, 58, 60), dans le plan des paramètres (55) tracé par l'angle d'incidence α et la longueur d'onde λ avec un axe de paramètre de longueur d'onde (51) et un axe de paramètre d'angle d'incidence (53), comprennent respectivement une fenêtre d'efficacité (65) qui s'étend le long d'une droite (57) à croissance monotone en référence à la longueur d'onde λ, dans laquelle la lumière qui est incidente sur le côté du verre de lunette à l'opposé de l'observateur sous un angle d'incidence α donné est diffractée avec l'efficacité de diffraction η ≥ 70 % dans un seul et même ordre de diffraction |m| ≥ 1 lorsque la paire de paramètres [α, λ] de la longueur d'onde λ et de l'angle d'incidence α de la lumière correspondant à un point dans le plan des paramètres (55) se trouve dans la fenêtre d'efficacité (65).

4. Verre de lunette selon la revendication 3, **caractérisé en ce que** la relation δ ≤ 0,036°/nm est vérifiée pour la pente δ des droites (57), ou **en ce que** la relation δ ≤ 0,024°/nm est vérifiée pour la pente δ des droites (57) ou **en ce que** la relation δ ≤ 0,012°/nm est vérifiée pour la pente δ des droites (57).

5. Verre de lunette selon la revendication 1 ou 2, **caractérisé en ce que** les structures de diffraction (24, 26, 56, 58, 60), dans le plan des paramètres (55) tracé par l'angle d'incidence α et la longueur d'onde λ avec un axe de paramètre de longueur d'onde (51) et un axe de paramètre d'angle d'incidence (53), comprennent respectivement une fenêtre d'efficacité (65) qui s'étend le long d'une droite (57) à croissance monotone en référence à la longueur d'onde λ, entre une première tangente (59) parallèle aux droites (57) croissantes et une deuxième tangente (61) décalée parallèlement de l'angle Δα ≤ 20° par rapport à la première tangente (59) dans la direction de l'axe de paramètre d'angle d'incidence (53), dans laquelle la lumière qui est incidente sur le côté du verre de lunette à l'opposé de l'observateur sous un angle d'incidence α donné est diffractée avec l'efficacité de diffraction η ≥ 70 % dans un seul et même ordre de diffraction |m| ≥ 1 lorsque la paire de paramètres [α, λ] de la longueur d'onde λ et de l'angle d'incidence α de la lumière correspondant à un point dans le plan des paramètres (55) se trouve dans la fenêtre d'efficacité (65), ou
**en ce que** les structures de diffraction (24, 26, 56, 58, 60), dans le plan des paramètres (55) tracé par l'angle d'incidence α et la longueur d'onde λ avec un axe de paramètre de longueur d'onde (51) et un axe de paramètre d'angle d'incidence (53), comprennent respectivement une fenêtre d'efficacité (65) qui s'étend le long d'une droite (57) à croissance monotone en référence à la longueur d'onde λ, entre une première tangente (59) parallèle aux droites (57) croissantes et une deuxième tangente (61) décalée parallèlement de l'angle Δα ≤ 15° par rapport à la première tangente (59) dans la direction de l'axe de paramètre d'angle d'incidence (53), dans laquelle la lumière qui est incidente sur le côté du verre de lunette à l'opposé de l'observateur sous un angle d'incidence α donné est diffractée avec l'efficacité de diffraction η ≥ 70 % dans un seul et même ordre de diffraction |m| ≥ 1 lorsque la paire de paramètres [α, λ] de la longueur d'onde λ et de l'angle d'incidence α de la lumière correspondant à un point dans le plan des paramètres (55) se trouve dans la fenêtre d'efficacité (65), ou
**en ce que** les structures de diffraction (24, 26, 56, 58, 60), dans le plan des paramètres (55) tracé par l'angle d'incidence α et la longueur d'onde λ avec un axe de paramètre de longueur d'onde (51) et un axe de paramètre d'angle d'incidence (53), comprennent respectivement une fenêtre d'efficacité (65) qui s'étend le long d'une droite (57) à croissance monotone en référence à la longueur d'onde λ, entre une première tangente (59) parallèle aux droites (57) croissantes et une deuxième tangente (61) décalée parallèlement de l'angle Δα ≤ 10° ou Δα ≤ 6° par rapport à la première tangente (59) dans la direction de l'axe de paramètre d'angle d'incidence (53), dans laquelle la lumière qui est incidente sur le côté du verre de lunette à l'opposé de l'observateur sous un angle d'incidence α donné est diffractée avec l'efficacité de diffraction η ≥ 70 % dans un seul et même ordre de diffraction |m| ≥ 1 lorsque la paire de paramètres [α, λ] de la longueur d'onde λ et de l'angle d'incidence α de la lumière correspondant à un point dans le plan des paramètres (55) se trouve dans la fenêtre d'efficacité (65) .

6. Verre de lunette selon l'une des revendications 3 à 5, **caractérisé en ce que** la fenêtre d'efficacité (65) s'étend symétriquement le long des droites (57) et/ou **en ce que** la droite (57) le long de laquelle s'étend la fenêtre d'efficacité (65) suit approximativement une ligne qui croise la fenêtre d'efficacité (65) sur laquelle l'efficacité de diffraction η est maximale.

7. Verre de lunette selon l'une des revendications 1 à 6, **caractérisé en ce que** chaque structure de diffraction (24, 26) est réalisée sous la forme d'une modulation de l'indice de réfraction complexe η(λ ; x,y,z) = nᵣ(λ ; x,y,z) + inᵢ(λ ; x,y,z) du corps dans au moins une direction de l'espace, l'amplitude Δn(λ) de la modulation de l'indice de réfraction complexe n(λ ; x,y,z) satisfaisant à la relation suivante pour la lumière ayant la longueur d'onde 400 nm ≤ λ ≤ 800 nm : 0,01 ≤ |Δn (λ)| ≤ 0,05.

8. Verre de lunette selon l'une des revendications 1 à 7, **caractérisé en ce que** l'objet de phase (20) a un effet de lentille.

9. Verre de lunette selon l'une des revendications 1 à 8, **caractérisé en ce que** l'objet de phase comporte des couches (66, 68, 70) superposées d'un matériau optiquement transparent ayant un indice de réfraction modulé, les couches (66, 68, 70) superposées étant appliquées sur un support (62) transparent à la lumière visible.

10. Verre de lunette selon l'une des revendications 1 à 9, **caractérisé en ce qu'**en plus de l'effet de diffraction de la lumière, il existe un effet de réfringence de la lumière.

11. Verre de lunette selon l'une des revendications 1 à 10, **caractérisé en ce que** le verre de lunette est un verre de lunette progressif.

12. Procédé pour déterminer la conception d'un verre de lunette, avec lequel
une géométrie et une fonction de transmission optique sont prédéfinies pour le verre de lunette (102) ; **caractérisé en ce que**
une surface d'objet (29) comprenant une pluralité de segments de surface (32) est prédéfinie et un objet de phase, ayant un effet de déviation de la lumière dépendant de la direction du regard, est calculé pour la fonction de transmission optique prédéfinie et la géométrie prédéfinie, lequel possède une pluralité de structures de diffraction au moyen desquelles la lumière monochromatique ayant la longueur d'onde 380 nm ≤ λ ≤ 800 nm est diffractée avec l'efficacité de diffraction η ≥ 70 % dans un seul et même ordre de diffraction |m| ≥ 1 lorsque la lumière monochromatique est incidente sous l'angle d'incidence α par rapport à une normale à la surface *̅n̅*̅ de la face avant du verre de lunette (23) au niveau de l'endroit traversé par la direction du regard sur le côté du verre de lunette à l'opposé de l'observateur, lequel est compris dans un intervalle d'angles de 15° de large, spécifique à la structure de diffraction et dépendant de la longueur d'onde de la lumière,
l'objet de phase ayant un effet diffractif f(θₐ) qui, conjointement avec l'effet réfractif du verre de lunette (102), forme au moins approximativement la fonction de transmission optique prédéfinie, et chaque structure de diffraction (24) formant avec une structure de diffraction (26) supplémentaire, séparée dans l'espace de la structure de diffraction (24), une paire actionneur-compensateur (31), les déviations, provoquées par les structures de diffraction (24, 26) qui forment une paire actionneur-compensateur (31), de la lumière incidente sur le côté à l'opposé de l'observateur s'annulant au moins partiellement, chaque structure de diffraction (24, 26) ne diffractant que la lumière dont la longueur d'onde λ est comprise dans une plage de longueurs d'onde λ₀ ± Δλ donnée et qui est incidente sur la structure de diffraction (24, 26) sous un angle d'incidence α' rapporté à une surface limite côté objet (35, 33) de la structure de diffraction (24, 26), lequel est compris dans une plage d'angles d'incidence α₀ ± Δα donnée, spécifique à la structure de diffraction, et la lumière provenant de chaque segment de surface (32) d'une surface d'objet (29) prédéfinie étant diffractée au moyen d'une paire actionneur-compensateur (31) ou au moyen de plusieurs paires actionneur-compensateur (31) de telle sorte qu'une image nette du segment de surface (32) concerné de la surface d'objet (29) peut se former sur la rétine (36) d'un oeil (27) de l'observateur.

13. Procédé selon la revendication 12, **caractérisé en ce que** la fonction de transmission optique prédéfinie compense au moins partiellement un défaut visuel de l'observateur.

14. Procédé de fabrication pour un verre de lunette ayant un support (62) transparent, sur lequel une couche optique (66) ou plusieurs couches optiques (66, 68, 70) sont appliquées,
avec lequel un support (62) transparent est fourni ; avec lequel plusieurs couches optiques (66, 68, 70) constituées d'un photopolymère sont appliquées sur le support transparent (62) ; et
avec lequel un hologramme d'un élément optique (98) disposé dans une position définie en référence à la couche optique est généré dans chaque couche optique (66, 68, 70),
**caractérisé en ce que**
un objet de phase, ayant un effet de déviation de la lumière dépendant de la direction du regard, est ici généré sur le support optique (62), lequel possède une pluralité de structures de diffraction au moyen desquelles la lumière monochromatique ayant la longueur d'onde 380 nm ≤ λ ≤ 800 nm est diffractée avec l'efficacité de diffraction η ≥ 70 % dans un seul et même ordre de diffraction |m| ≥ 1 lorsque la lumière monochromatique est incidente sous l'angle d'incidence α par rapport à une normale à la surface *̅n̅*̅ de la face avant du verre de lunette (23) au niveau de l'endroit traversé par la direction du regard sur le côté du verre de lunette à l'opposé de l'observateur, lequel est compris dans un intervalle d'angles de 15° de large, spécifique à la structure de diffraction et dépendant de la longueur d'onde de la lumière, chaque structure de diffraction (24) formant avec une structure de diffraction (26) supplémentaire, séparée dans l'espace de la structure de diffraction (24), une paire actionneur-compensateur (31), et les déviations, provoquées par les structures de diffraction (24, 26) qui forment une paire actionneur-compensateur (31), de la lumière incidente sur le côté à l'opposé de l'observateur s'annulant au moins partiellement, chaque structure de diffraction (24, 26) ne diffractant que la lumière dont la longueur d'onde λ est comprise dans une plage de longueurs d'onde λ₀ + Δλ donnée et qui est incidente sur la structure de diffraction (24, 26) sous un angle d'incidence α' rapporté à une surface limite côté objet (35, 33) de la structure de diffraction (24, 26), lequel est compris dans une plage d'angles d'incidence α₀ ± Δα donnée, spécifique à la structure de diffraction, et la lumière provenant de chaque segment de surface (32) d'une surface d'objet (29) prédéfinie étant diffractée au moyen d'une paire actionneur-compensateur (31) ou au moyen de plusieurs paires actionneur-compensateur (31) de telle sorte qu'une image nette du segment de surface (32) concerné de la surface d'objet (29) peut se former sur la rétine (36) d'un oeil (27) de l'observateur.
